# EUROPEAN PATENT APPLICATION

(11) **EP 4 564 716 A1**
(43) Date of publication of application: **04.06.2025**
(21) Application number: 22952426.9
(22) Date of filing: 28.07.2022
(51) Int. Cl.: H04L 5/00

(54) **COMMUNICATION METHOD AND STATION**

(71) Applicant: GUANGDONG OPPO MOBILE TELECOMMUNICATIONS CORP., LTD., Dongguan, Guangdong 523860 (CN)
(72) Inventor: LI, Yapu, Dongguan, Guangdong 523860 (CN); HUANG, Lei, Singapore 049483 (SG)
(74) Representative: RGTH
(86) International application number: PCT/CN2022/108755
(87) International publication number: WO 2024/020969

(57) **Abstract**

The present disclosure relates to the field of communications, and in particular, to a communication method, a station, and a communication device. A specific implementation includes: acquiring, by a station, a transmission resource of a data packet, where the transmission resource of the data packet includes a multiple resource unit (MRU) divided based on a first channel. The embodiments of the present disclosure can extend a communication bandwidth, and increase spectrum utilization efficiency based on the MRU.

## Description

### TECHNICAL FIELD

The present disclosure relates to the field of communications, and in particular, to a communication method and a station.

### BACKGROUND

With the development of augmented reality (Augmented Reality, AR), virtual reality (Virtual Reality, VR), mixed reality (Mixed Reality, MR) and the Internet of Things, etc., a large number of wireless communication devices such as wireless fidelity (Wireless Fidelity, Wi-Fi) devices may be accessed. Based on the maximum channel bandwidth supported by the current communication system, the next generation Wi-Fi communication bandwidth may be extended. Under a new channel bandwidth, the construction of a physical layer protocol data unit (Physical Layer Protocol Data Unit, PPDU) and multiple resource unit (Multiple Resource Unit, MRU) has not yet been determined.

### SUMMARY

Embodiments of the present disclosure provide a communication method, including:
acquiring, by a station, a transmission resource of a data packet, where the transmission resource of the data packet includes a multiple resource unit (MRU) divided based on a first channel.

The embodiments of the present disclosure provide a station, including:
a processing unit, configured to acquire a transmission resource of a data packet, where the transmission resource of the data packet includes a multiple resource unit (MRU) divided based on a first channel.

The embodiments of the present disclosure provide a communication device, including a processor and a memory. The memory is configured to store a computer program, and the processor is configured to call and run the computer program stored in the memory, to cause the communication device to perform the above communication method.

The embodiments of the present disclosure provide a chip configured to implement the above communication method.

Specifically, the chip includes: a processor, which is configured to call a computer program from a memory and run the computer program, to cause a device equipped with the chip to perform the above communication method.

The embodiments of the present disclosure provide a computer-readable storage medium configured to store a computer program. The computer program, when executed by a device, causes the device to perform the above communication method.

The embodiments of the present disclosure provide a computer program product, including computer program instructions, and the computer program instructions cause a computer to perform the above communication method.

The embodiments of the present disclosure provide a computer program, and the computer program, when executed on a computer, causes the computer to perform the above communication method.

The embodiments of the present disclosure can extend a communication bandwidth, and increase spectrum utilization efficiency based on the MRU.

### BRIEF DESCRIPTION OF THE DRAWINGS

FIG. 1 is a schematic diagram of an application scenario in accordance with the embodiments of the present disclosure.
FIG. 2 is a schematic flowchart of a communication method in accordance with an embodiment of the present disclosure.
FIG. 3 is a schematic block diagram of a station in accordance with an embodiment of the present disclosure.
FIG. 4 is a schematic diagram of a UHR MU PPDU format.
FIG. 5 is a schematic diagram of a UHR TB PPDU format.
FIG. 6 is a schematic diagram of a 2×996+484+242-tone MRU allowed in a 240MHz UHR PPDU.
FIG. 7 is a schematic diagram of a 2×996+484-tone MRU allowed in a 240MHz UHR PPDU.
FIG. 8 is a schematic diagram of a 5×996+484-tone MRU allowed in a 480MHz UHR PPDU.
FIG. 9 is a schematic diagram of a 5×996-tone MRU allowed in a 480MHz UHR PPDU.
FIG. 10 is a schematic diagram of a 4×996+484-tone MRU allowed in a 480MHz UHR PPDU.
FIG. 11 is a schematic diagram of a 7×996 MRU allowed in a 640MHz UHR PPDU.
FIG. 12 is a schematic diagram of a 6×996 MRU allowed in a 640MHz UHR PPDU.
FIG. 13 is a schematic diagram of a 5×996 MRU allowed in a 640MHz UHR PPDU.
FIG. 14 is a schematic block diagram of a communication device in accordance with the embodiments of the present disclosure.
FIG. 15 is a schematic block diagram of a chip in accordance with the embodiments of the present disclosure.
FIG. 16 is a schematic block diagram of a communication system in accordance with the embodiments of the present disclosure.

### DETAILED DESCRIPTION

Technical solutions in the embodiments of the present disclosure will be described below with reference to the drawings.

The technical solutions in the embodiments of the present disclosure may be applied to various communication systems, such as wireless local area network (WLAN), wireless fidelity (WiFi) or other communication systems.

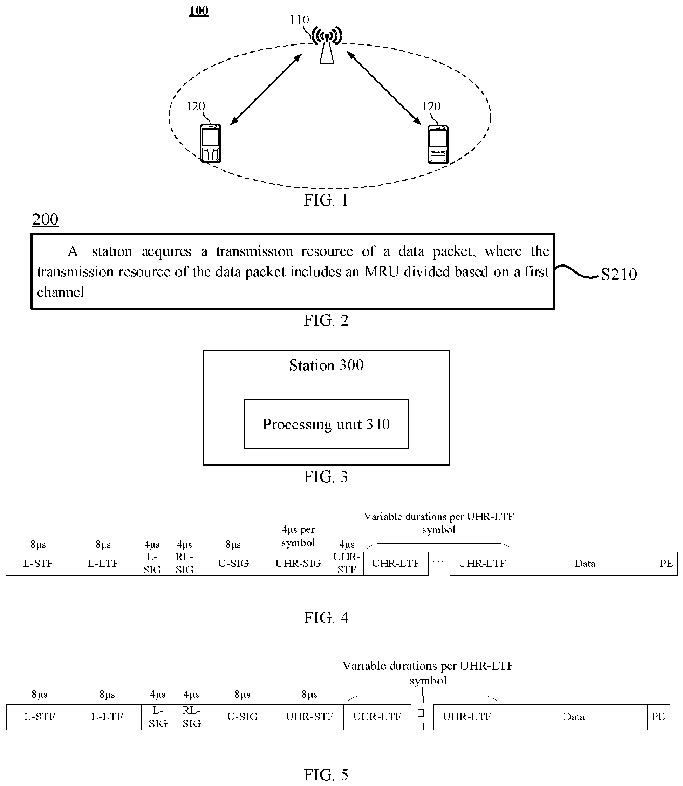

Exemplarily, a communication system 100 applied in the embodiments of the present disclosure is shown in FIG. 1. The communication system 100 may include an access point (Access Point, AP) 110 and a station (STATION, STA) 120 accessing a network via the access point 110.

In some scenarios, the AP is also called an AP STA, that is, in a sense, the AP is also an STA.

In some scenarios, the STA is also called a non-AP STA.

A communication in the communication system 100 may be a communication between an AP and a non-AP STA, and may also be a communication between a non-AP STA and a non-AP STA, or a communication between an STA and a peer STA, where the peer STA may refer to a device that performs an end-to-end communication with the STA, for example, the peer STA may be an AP, and may also be a non-AP STA.

The AP is equivalent to a bridge connecting a wired network and a wireless network, and a main function of the AP is to connect various wireless network clients together and then connect the wireless network to Ethernet. An AP device may be a terminal device (such as a mobile phone) or a network device (such as a router). The terminal device or the network device has a chip for implementing a communication function, such as a WLAN or WiFi chip.

It should be understood that a role of the STA in the communication system is not absolute. For example, in some scenarios, when a mobile phone is connected to a router, the mobile phone is a non-AP STA. When the mobile phone serves as a hotspot for other mobile phones, the mobile phone plays the role of an AP.

The AP and the non-AP STA may be devices applied in the Internet of Vehicles, an Internet of Things node, a sensor or the like in the Internet of Things (Internet Of Things, IoT), a smart camera, a smart remote controller, a smart water, electricity meter or the like in smart homes, and a sensor or the like in smart cities.

In some embodiments, the non-AP STA may support the 802.11be standard. The non-AP STA may also support various current and future 802.11 family wireless local area networks (WLAN) standards such as 802.11ax, 802.11ac, 802.11n, 802.11g, 802.11b and 802.11a, etc.

In some embodiments, the AP may be a device supporting the 802.11be standard. The AP may also be a device that supports various current and future 802.11 family WLAN standards such as 802.11ax, 802.11ac, 802.11n, 802.11g, 802.11b and 802.11a, etc.

In the embodiments of the present disclosure, the STA may be a mobile phone, a pad, a computer, a virtual reality (VR) device, an augmented reality (AR) device, a wireless device in industrial control, a set-top box, a wireless device in self-driving, an in-vehicle communication device, a wireless device in remote medical, a wireless device in a smart grid, a wireless device in transportation safety, a wireless device in a smart city or a wireless device in a smart home, a wireless communication chip/ASIC/SOC/etc., that support the WLAN/WiFi technology.

Frequency bands that may be supported by the WLAN technology may include but are not limited to: low frequency bands (e.g., 2.4 GHz, 5 GHz, 6 GHz) and high frequency bands (e.g., 45 GHz, 60 GHz).

FIG. 1 exemplarily shows one AP STA and two non-AP STAs. Optionally, the communication system 100 may include multiple AP STAs and other numbers of non-AP STAs, which is not limited in the embodiments of the present disclosure.

It should be understood that the terms herein "system" and "network" are often used interchangeably herein. The term "and/or" herein is only an association relationship to describe associated objects, indicating that there may be three relationships, for example, "A and/or B" may indicate three cases of: A alone, both A and B, and B alone. In addition, the character "/" herein generally indicates that associated objects before and after this character are in an "or" relationship.

It should be understood that the "indication" and its variants mentioned in the embodiments of the present application may be a direct indication or an indirect indication, or may represent that there is an association relationship. For example, A indicating B may mean that A directly indicates B, e.g., that B may be obtained by A; or it may mean that A indirectly indicates B, e.g., that A indicates C, and B may be obtained by C; or it may mean that there is an association relationship between A and B.

In the description of the embodiments of the present application, the term "corresponding" and its variants may mean a direct or indirect corresponding relationship between the two, or an association relationship between the two, or a relationship of indicating and being indicated, or configuring and being configured, etc.

To facilitate the understanding of the technical solutions of the embodiments of the present disclosure, related technologies of the embodiments of the present disclosure are described below. The following related technologies, as optional solutions, may be arbitrarily combined with the technical solutions of the embodiments of the present disclosure, and those combined solutions all belong to the protection scope of the embodiments of the present disclosure.

Allocation and use of resource unit (Resource Unit, RU) and MRU

Currently, the maximum bandwidth of a Wi-Fi channel is 320 MHz. 8 types of resource units (RUs) are defined, and an MRU composed of a plurality of RUs is also defined. One RU or MRU may be allocated to one STA, specifically as follows.

### (1) RU

Examples of RUs used for uplink and downlink orthogonal frequency division multiple access (Orthogonal Frequency Division Multiple Access, OFDMA) transmissions in an extremely high throughput (EHT) PPDU are as follows: 26-tone RU, 52-tone RU, 106-tone RU, 242-tone RU, 484-tone RU, 996-tone RU, and 2×996-tone RU (two 996-tone RUs). Here, tone represents a number of tones (sub-carriers). For example, 26-tone represents 26 tones. RUs are classified into a large-size RU and a small-size RU.

Large-size RU: RU size is greater than or equal to 242-tone, including 242-tone RU, 484-tone RU, 996-tone RU, and 2×996-tone RU.

Small-size RU: RU size is smaller than 242-tone, including 26-tone RU, 52-tone RU, and 106-tone RU.

The small-size RU may be used in a 20 MHz, 40 MHz, 80 MHz, 160 MHz or 320 MHz OFDMA EHT PPDU. The 242-tone RU may be used in a 40 MHz, 80 MHz, 160 MHz, or 320 MHz OFDMA EHT PPDU. The 484-tone RU may be used in an 80 MHz, 160 MHz, or 320 MHz OFDMA EHT PPDU. The 996-tone RU may be used in a 160 MHz or 320 MHz OFDMA EHT PPDU. The 2×996-tone RU may be used in a 320 MHz OFDMA EHT PPDU.

### (2) MRU

A small-size RU can only be combined with another small-size RU to form a small-size MRU. A large-size RU can only be combined with another large-size RU to form a large-size MRU.

### (a) Small-size MRU

Examples of small-size MRUs used for uplink and downlink OFDMA transmissions in the EHT PPDU are as follows: 52+26-tone MRU and 106+26-tone MRU (an MRU composed of 106-tone and 26-tone). The 52-tone RU and 26-tone RU in any one 52+26-tone MRU need to be from a same 20 MHz sub-channel. The 106-tone RU and 26-tone RU in any one 106+26-tone MRU need to be from a same 20 MHz sub-channel.

### (b) Large-size MRU

Examples of large-size MRUs used for uplink and downlink OFDMA transmissions in the EHT PPDU are as follows: 484+242-tone MRU, 996+484-tone MRU, 2×996+484-tone MRU, 3×996-tone MRU, and 3×996+484-tone MRU.

The 484+242-tone MRU is allowed to be used in 80 MHz, 160 MHz and 320 MHz OFDMA EHT PPDUs, and the 484-tone RU and 242-tone RU in any one 484+242-tone MRU need to be from a same 80 MHz sub-channel.

The 996+484-tone MRU is allowed to be used in 160 MHz and 320 MHz OFDMA EHT PPDUs; and the 996-tone RU and 484-tone RU in any one 996+484-tone MRU must come from a same 160 MHz sub-channel.

The 2×996+484-tone MRU, 3×996-tone MRU, and 3×996+484-tone MRU are allowed to be used in a 320 MHz OFDMA EHT PPDU. The 996-tone RU and 484-tone RU in any one 2×996+484-tone MRU need to be from three consecutive 80 MHz sub-channels.

FIG. 2 is a schematic flowchart of a communication method 200 in accordance with an embodiment of the present disclosure. The method may optionally be applied to the system shown in FIG. 1, but is not limited thereto. The method includes at least a part of the following contents.

S210, a station acquires a transmission resource of a data packet, where the transmission resource of the data packet includes an MRU divided based on a first channel.

In the embodiments of the present disclosure, the station may be an AP STA or a non-AP STA. The transmission resource of the data packet may include a first channel, and the MRU may be obtained by dividing the first channel. The station may obtain the MRU by dividing the first channel by itself, and may also acquire information of the MRU of the divided first channel from other devices. The station may utilize the transmission resource of the data packet to send and/or receive the data packet.

In one implementation, the MRU is obtained by dividing the first channel based on puncturing information and/or a bandwidth of the first channel.

In the embodiments of the present disclosure, first, the bandwidth of the first channel may be divided into a plurality of MRUs, and then puncturing is performed in the plurality of MRUs based on the puncturing information to obtain final MRUs.

In one implementation, the puncturing information includes at least one of a puncturing granularity, a location of a punctured sub-channel, and a number of punctured sub-channels.

In the embodiments of the present disclosure, the puncturing granularity may include a bandwidth of the punctured sub-channel. For example, the puncturing granularity may be a 20 MHz sub-channel, a 40 MHz sub-channel, an 80 MHz sub-channel, or the like. The location of the punctured sub-channel may include a specific location for puncturing in a frequency range of the bandwidth of the first channel. The number of punctured sub-channels may be one or more.

In one implementation, the data packet is an ultra-high reliability (UHR) physical layer protocol data unit (PPDU).

In one implementation, the UHR PPDU may include a UHR multiple user (Multiple User, MU) PPDU and/or a UHR trigger based (Trigger based, TB) PPDU.

For example, the UHR MU PPDU may be used to transmit to one or more users. The UHR MU PPDU may include at least one of the following fields: L-STF (Non-HT Short Training field, non-high throughput short training field), L-LTF (Non-HT Long Training field, non-high throughput long training field), L-SIG (Non-HT SIGNAL field, non-high throughput signal field), U-SIG (Universal SIGNAL field, universal signal field), UHR-SIG (UHR SIGNAL field, ultra-high reliability signal field), UHR-STF (UHR Short Training field, ultra-high reliability short training field), UHR-LTF (UHR Long Training field, ultra-high reliability long training field), Data (data), and PE (Packet Extension field, packet extension field). Here, L-STF, L-LTF, L-SIG, U-SIG and UHR-SIG are called pre-UHR (pre-UHR or forward UHR) modulation fields; UHR-STF, UHR-LTF, Data and PE are called UHR modulation fields.

As another example, the UHR TB PPDU may be used to transmit a response trigger frame from an AP. The UHR TB PPDU may include L-STF, L-LTF, L-SIG, U-SIG, UHR-STF, UHR-LTF, Data, and PE fields. Here, L-STF, L-LTF, L-SIG and U-SIG are called pre-UHR modulation fields; UHR-STF, UHR-LTF, Data and PE are called UHR modulation fields.

In one implementation, the UHR modulation fields of the UHR PPDU may use the MRU.

In one implementation, the bandwidth of the first channel is greater than a set bandwidth, and a size of the MRU is greater than a set size.

In the embodiments of the present disclosure, the set bandwidth may be a maximum channel bandwidth or a large channel bandwidth of the communication system. For example, the maximum bandwidth of the 5 GHz frequency band is 160 MHz. The maximum bandwidth of the 6GHz frequency band is 320 MHz. The first channel may be a newly added channel, and the bandwidth of the first channel may be a newly added bandwidth. The transmission resource of the communication system may be divided to obtain the first channel with a large bandwidth. For example, in the ultra-high reliability (Ultra-High Reliability, UHR) Wi-Fi communication, the bandwidth of the first channel may include a newly added bandwidth, which may be a newly added bandwidth such as 240 MHz, 480 MHz, or 640 MHz in the 5 GHz frequency band, and 240 MHz, 480 MHz, or 640 MHz in the 6 GHz frequency band. The specific numerical value of the newly added channel bandwidth in the above example may also be other values. The size of the MRU may be larger than the set size. For example, the set size may be 242-tone, 484-tone, or 996-tone, etc. If one sub-channel needs to be punctured in the first channel, the puncturing may be performed in order of frequency from low to high or from high to low, to obtain multiple types of MRUs. If a plurality of sub-channels need to be punctured in the first channel, one sub-channel may be punctured first, and then another sub-channel may be punctured in a remaining bandwidth, until the puncturing is completed.

In one implementation, the first channel is a 240 MHz channel, the 240 MHz channel is a channel with a bandwidth of 240 MHz in a 5 GHz frequency band, or a channel with a bandwidth of 240 MHz in a 6 GHz frequency band.

In the embodiments of the present disclosure, the bandwidth of the 240 MHz channel may be divided and punctured, to obtain an MRU of the 240 MHz channel. For example, the MRU is constructed based on the 240 MHz bandwidth, and a puncturing granularity of the 240 MHz channel is 20 MHz. A 2×996+484+242-tone MRU is constructed by puncturing one 20 MHz sub-channel, and the MRU includes two 996-tone RUs, one 484-tone RU and one 242-tone RU. A 2×996+484-tone MRU is constructed by puncturing one 40 MHz sub-channel, and the MRU includes two 996-tone RUs and one 484-tone RU.

In one implementation, the MRU is used for a transmission of a PPDU with a bandwidth of 240 MHz, and the PPDU with the bandwidth of 240 MHz includes a non-OFDMA 240MHz UHR PPDU and/or an OFDMA 240MHz UHR PPDU.

In one implementation, the puncturing information is puncturing one 20 MHz sub-channel, and a puncturing method of the 240 MHz channel includes: in the bandwidth of the 240 MHz channel, puncturing 1st to 12th 20 MHz sub-channels respectively in order of frequency to obtain 12 types of MRUs, and the MRU includes two 996-tone RUs, one 484-tone RU and one 242-tone RU.

An example for a 2×996+484+242-tone MRU used for the uplink or downlink PPDU transmission is as follows: for a 2×996+484+242-tone MRU, it is allowed to puncture one 20 MHz sub-channel in one 240MHz UHR PPDU. The 2×996+484+242-tone MRU is composed of two 996-tone RUs, one 484-tone RU, and one 242-tone RU in one 240MHz UHR PPDU. In the 240 MHz bandwidth, 1st to 12th 20 MHz sub-channels are punctured respectively in order of frequency from low to high (or from high to low) to construct 2×996+484+242-tone MRU 1 to MRU 12.

In one case, the 2×996+484+242-tone MRU is used only for the non-orthogonal frequency division multiple access (OFDMA) 240MHz UHR PPDU transmission.

In another case, the 2×996+484+242-tone MRU may be used for the non-OFDMA 240MHz UHR PPDU transmission and the OFDMA 240MHz UHR PPDU transmission.

In one implementation, a data tone of the MRU is composed of a union of data tones of two 996-tone RUs, one 484-tone RU and one 242-tone RU constituting the MRU; and/or, a pilot tone of the MRU is composed of a union of pilot tones of two 996-tone RUs, one 484-tone RU and one 242-tone RU constituting the MRU.

For example, the data tone of the 2×996+484+242-tone MRU is composed of a union of data tones of two 996-tone RUs, one 484-tone RU, and one 242-tone RU. For another example, the pilot tone of the 2×996+484+242-tone MRU is composed of a union of pilot tones of two 996-tone RUs, one 484-tone RU, and one 242-tone RU.

In one implementation, the puncturing information is puncturing one 40 MHz sub-channel, and a puncturing method of the 240 MHz channel includes: in the bandwidth of the 240 MHz channel, puncturing 1st to 6th 40 MHz sub-channels respectively in order of frequency to obtain 6 types of MRUs, and the MRU includes two 996-tone RUs and one 484-tone RU.

An example for a 2×996+484-tone MRU used for the uplink or downlink PPDU transmission is as follows: for a 2×996+484-tone MRU, it is allowed to puncture one 40 MHz sub-channel in one 240MHz UHR PPDU. The 2×996+484-tone MRU is composed of two 996-tone RUs and one 484-tone RU in one 240MHz UHR PPDU. In the 240 MHz bandwidth, 1st to 6th 40 MHz sub-channels are punctured respectively in order of frequency from low to high (or from high to low) to construct 2×996+484-tone MRU 1 to MRU 6.

In one case, the 2×996+484-tone MRU is used only for the non-OFDMA 240MHz UHR PPDU transmission.

In another case, the 2×996+484-tone MRU may be used for the non-OFDMA 240MHz UHR PPDU transmission and the OFDMA 240MHz UHR PPDU transmission.

In one implementation, a data tone of the MRU is composed of a union of data tones of two 996-tone RUs and one 484-tone RU constituting the MRU; and/or, a pilot tone of the MRU is composed of a union of pilot tones of two 996-tone RUs and one 484-tone RU constituting the MRU.

For example, the data tone of the 2×996+484-tone MRU is composed of a union of data tones of two 996-tone RUs and one 484-tone RU. For another example, the pilot tone of the 2×996+484+242-tone MRU is composed of a union of pilot tones of two 996-tone RUs and one 484-tone RU.

In one implementation, the first channel is a 480 MHz channel, and the 480 MHz channel is a channel with a bandwidth of 480 MHz in a 5 GHz frequency band, or a channel with a bandwidth of 480 MHz in a 6 GHz frequency band.

In the embodiments of the present disclosure, the bandwidth of the 480 MHz channel may be divided and punctured, to obtain an MRU of the 480 MHz channel. For example, the MRU is constructed based on the 480 MHz bandwidth, and a puncturing granularity of the 480 MHz channel is 40 MHz. A 5×996+484-tone MRU is constructed by puncturing one 40 MHz sub-channel. A 5×996-tone MRU is constructed by puncturing one 80 MHz sub-channel, and the MRU includes five 996-tone RUs. A 4×996+484-tone MRU is constructed by simultaneously puncturing one 80 MHz sub-channel and one 40 MHz sub-channel, and the MRU includes four 996-tone RUs and one 484-tone RU.

In one implementation, the MRU is used for a transmission of a PPDU with a bandwidth of 480 MHz, and the PPDU with the bandwidth of 480 MHz includes a non-OFDMA 480MHz UHR PPDU and/or an OFDMA 480MHz UHR PPDU.

In one implementation, the puncturing information is puncturing one 40 MHz sub-channel, and a puncturing method corresponding to the 480 MHz channel includes: in the bandwidth of the 480 MHz channel, puncturing 1st to 12th 40 MHz sub-channels respectively in order of frequency to obtain 12 types of MRUs, and the MRU includes five 996-tone RUs and one 484-tone RU.

An example for a large-size MRU, a 5×996+484-tone MRU, used for the uplink or downlink PPDU transmission is as follows: for a 5×996+484-tone MRU, it is allowed to puncture one 40 MHz sub-channel in one 480MHz UHR PPDU. The 5×996+484-tone MRU is composed of five 996-tone RUs and one 484-tone RU in one 480MHz UHR PPDU. In the 480 MHz bandwidth, 1st to 12th 40 MHz sub-channels are punctured respectively in order of frequency from low to high (or from high to low), to construct 5×996+484-tone MRU 1 to MRU 12.

In one case, the 5×996+484-tone MRU is used only for the non-OFDMA 480MHz UHR PPDU transmission.

In another case, the 5×996+484-tone MRU may be used for the non-OFDMA 480MHz UHR PPDU transmission and the OFDMA 480MHz UHR PPDU transmission.

In one implementation, a data tone of the MRU is composed of a union of data tones of five 996-tone RUs and one 484-tone RU constituting the MRU; and/or, a pilot tone of the MRU is composed of a union of pilot tones of five 996-tone RUs and one 484-tone RU constituting the MRU.

For example, the data tone of the 5×996+484-tone MRU is composed of a union of data tones of five 996-tone RUs and one 484-tone RU. For another example, the pilot tone of the 5×996+484-tone MRU is composed of a union of pilot tones of five 996-tone RUs and one 484-tone RU.

In one implementation, the puncturing information is puncturing one 80 MHz sub-channel, and a puncturing method corresponding to the 480 MHz channel includes: in the bandwidth of the 480 MHz channel, puncturing 1st to 6th 80 MHz sub-channels respectively in order of frequency to obtain 6 types of MRUs, and the MRU includes five 996-tone RUs.

An example for a 5×996-tone MRU used for the uplink or downlink PPDU transmission is as follows: for a 5×996-tone MRU, it is allowed to puncture one 80 MHz sub-channel in one 480MHz UHR PPDU. The 5×996-tone MRU is composed of five 996-tone RUs in one 480MHz UHR PPDU. In the 480 MHz bandwidth, 1st to 6th 80 MHz sub-channels are punctured respectively in order of frequency from low to high (or from high to low), to construct 5×996-tone MRU 1 to MRU 6.

In one case, the 5×996-tone MRU is used only for the non-OFDMA 480MHz UHR PPDU transmission.

In another case, the 5×996-tone MRU may be used for the non-OFDMA 480MHz UHR PPDU transmission and the OFDMA 480MHz UHR PPDU transmission.

In one implementation, a data tone of the MRU is composed of a union of data tones of five 996-tone RUs constituting the MRU; and/or, a pilot tone of the MRU is composed of a union of pilot tones of five 996-tone RUs constituting the MRU.

For example, the data tone of the 5×996-tone MRU is composed of a union of data tones of five 996-tone RUs. For another example, the pilot tone of the 5×996-tone MRU is composed of a union of pilot tones of five 996-tone RUs.

In one implementation, puncturing information is puncturing one 80 MHz sub-channel and one 40 MHz sub-channel, and a puncturing method corresponding to the 480 MHz channel includes at least one of the following:
in the bandwidth of the 480 MHz channel, first puncturing any one 80 MHz sub-channel, and then puncturing any one 40 MHz sub-channel in a remaining bandwidth to obtain 60 types of MRUs;
in the bandwidth of the 480 MHz channel, first puncturing a first 80 MHz sub-channel or a last 80 MHz sub-channel, and then puncturing any one 40 MHz sub-channel in a remaining bandwidth to obtain 20 types of MRUs;
where the MRU includes four 996-tone RUs and one 484-tone RU.

An example for a 4×996+484-tone MRU used for the uplink or downlink PPDU transmission is as follows: for a 4×996+484-tone MRU, it is allowed to first puncture any one 80 MHz in one 480MHz UHR PPDU, and then puncture any one 40 MHz sub-channel in the remaining 400 MHz. The 4×996+484-tone MRU is composed of four 996-tone RUs and one 484-tone RU in one 480MHz UHR PPDU. There are 60 types of 4×996+484-tone MRUs in total.

If a 1st 80 MHz sub-channel is first punctured, and then in the remaining 400 MHz channel, 1st to 10th 40 MHz sub-channels are punctured respectively in order of frequency from low to high (or from high to low), 10 types of MRUs are constructed, for example: 4×996+484-tone MRU 1 to MRU 10.

If a 2nd 80 MHz sub-channel is first puncturing, and then in the remaining non-consecutive 400 MHz channel, 1st to 10th 40 MHz sub-channels are punctured respectively in order of frequency from low to high (or from high to low), 10 types of MRUs are constructed, for example: 4×996+484-tone MRU 11 to MRU 20.

If a 3rd 80 MHz sub-channel is first puncturing, and then in the remaining non-consecutive 400 MHz channel, 1st to 10th 40 MHz sub-channels are punctured respectively in order of frequency from low to high (or from high to low), 10 types of MRUs are constructed, for example: 4×996+484-tone MRU 21 to MRU 30.

If a 4th 80 MHz sub-channel is first puncturing, and then in the remaining non-consecutive 400 MHz channel, 1st to 10th 40 MHz sub-channels are punctured respectively in order of frequency from low to high (or from high to low), 10 types of MRUs are constructed, for example: 4×996+484-tone MRU 31 to MRU 40.

If a 5th 80 MHz sub-channel is first puncturing, and then in the remaining non-consecutive 400 MHz channel, 1st to 10th 40 MHz sub-channels are punctured respectively in order of frequency from low to high, 10 types of MRUs are constructed, for example: 4×996+484-tone MRU 41 to MRU 50.

If a 6th 80 MHz sub-channel is first puncturing, and then in the remaining 400 MHz channel, 1st to 10th 40 MHz sub-channels are punctured respectively in order of frequency from low to high (or from high to low), 10 types of MRUs are constructed, for example: 4×996+484-tone MRU 51 to MRU 60.

In one case, the 4×996+484-tone MRU is used only for the non-OFDMA 480MHz UHR PPDU transmission.

In another case, the 4×996+484-tone MRU may be used for the non-OFDMA 480MHz UHR PPDU transmission and the OFDMA 480MHz UHR PPDU transmission.

Another example for the 4×996+484-tone MRU used for the uplink or downlink PPDU transmission is as follows: for the 4×996+484-tone MRU, it is allowed to puncture a 1st or 4th 80 MHz sub-channel in one 480MHz UHR PPDU, and then puncture any one 40 MHz sub-channel in remaining 400 MHz. The 4×996+484-tone MRU is composed of four 996-tone RUs and one 484-tone RU in one 480MHz UHR PPDU. There are 20 types of 4×996+484-tone MRUs in total. For 4×996+484-tone MRU 1 to MRU 10, a 6th 80 MHz sub-channel may be punctured, and then in the remaining 400 MHz bandwidth, 1st to 10th 40 MHz sub-channels may be punctured respectively in order of frequency from low to high (or from high to low). For 4×996+484-tone MRU 11 to MRU 20, a 1st 80 MHz sub-channel may be punctured, and then in the remaining 400 MHz bandwidth, 1st to 10th 40 MHz sub-channels may be punctured respectively in order of frequency from low to high (or from high to low).

In one case, the 4×996+484-tone MRU is used only for the non-OFDMA 480MHz UHR PPDU transmission.

In another case, the 4×996+484-tone MRU may be used for the non-OFDMA 480MHz UHR PPDU transmission and the OFDMA 480MHz UHR PPDU transmission.

In one implementation, a data tone of the MRU is composed of a union of data tones of four 996-tone RUs and one 484-tone RU constituting the MRU; and/or, a pilot tone of the MRU is composed of a union of pilot tones of four 996-tone RUs and one 484-tone RU constituting the MRU.

For example, the data tone of the 4×996+484-tone MRU is composed of a union of data tones of four 996-tone RUs and one 484-tone RU. For another example, the pilot tone of the 4×996+484-tone MRU is composed of a union of pilot tones of four 996-tone RUs and one 484-tone RU.

In one implementation, the first channel is a 640 MHz channel, and the 640 MHz channel is a channel with a bandwidth of 640 MHz in a 5 GHz frequency band, or a channel with a bandwidth of 640 MHz in a 6 GHz frequency band.

In the embodiments of the present disclosure, the bandwidth of the 640 MHz channel may be divided and punctured to obtain an MRU of the 640 MHz channel. For example, the MRU is constructed based on a 640 MHz bandwidth, and a puncturing granularity of the 640 MHz channel is 80 MHz. A 7×996-tone MRU is constructed by puncturing one 80 MHz sub-channel, and the MRU includes seven 996-tone RUs. For the 640 MHz channel, a 6×996-tone MRU is constructed by puncturing two 80 MHz sub-channels, and the MRU includes six 996-tone RUs. For the 640 MHz channel, a 5×996-tone MRU is constructed by puncturing three 80 MHz sub-channels simultaneously, and the MRU includes five 996-tone RUs.

In one implementation, the puncturing information is puncturing one 80 MHz sub-channel, and a puncturing method corresponding to the 640 MHz channel includes: in the bandwidth of the 640 MHz channel, puncturing 1st to 8th 80 MHz sub-channels respectively in order of frequency to obtain 8 types of MRUs, and the MRU includes seven 996-tone RUs.

An example of the 7×996-tone MRU for the uplink or downlink PPDU transmission is as follows: for a 7×996-tone MRU, it is allowed to puncture one 80 MHz sub-channel in one 640MHz UHR PPDU. The 7×996-tone MRU is composed of seven 996-tone RUs in one 640MHz UHR PPDU. In the 640 MHz bandwidth, 1st to 8th 80 MHz sub-channels are punctured respectively in order of frequency from low to high (or from high to low), to construct 7×996-tone MRU 1 to MRU 8.

In one case, the 7×996-tone MRU may only be used for the non-OFDMA 640MHz UHR PPDU transmission.

In another case, the 7×996-tone MRU may be used for the non-OFDMA 640MHz UHR PPDU transmission and the OFDMA 640MHz UHR PPDU transmission.

In one implementation, a data tone of the MRU is composed of a union of data tones of seven 996-tone RUs constituting the MRU; and/or, a pilot tone of the MRU is composed of a union of pilot tones of seven 996-tone RUs constituting the MRU.

For example, the data tone of the 7×996-tone MRU is composed of a union of data tones of seven 996-tone RUs. For another example, the pilot tone of the 7×996-tone MRU is composed of a union of pilot tones of seven 996-tone RUs.

In one implementation, the puncturing information is puncturing two 80 MHz sub-channels, and a puncturing method corresponding to the 640 MHz channel includes at least one of the following:
in the bandwidth of the 640 MHz channel, puncturing any two 80 MHz sub-channels to obtain 28 types of MRUs;
in the bandwidth of the 640 MHz channel, starting from a first 160 MHz sub-channel, puncturing one 160 MHz sub-channel in sequence to obtain 28 types of MRUs;
where the MRU includes six 996-tone RUs.

An example for a 6×996-tone MRU used for the uplink or downlink PPDU transmission is as follows: for a 6×996-tone MRU, it is allowed to puncture any two 80 MHz sub-channels in one 640MHz UHR PPDU. The 6×996-tone MRU is composed of six 996-tone RUs in one 640MHz UHR PPDU. There are 28 types of 6×996-tone MRUs in the 640MHz UHR PPDU in total.

If a 1st 80 MHz sub-channel is first punctured, and then in the remaining non-consecutive 560MHz channel, 1st to 7th 80 MHz sub-channels are punctured respectively in order of frequency from low to high (or from high to low), 7 types of MRUs are constructed, for example: 6×996-tone MRU 1 to MRU 7.

If a 2nd 80 MHz sub-channel is first puncturing, and then in the remaining non-consecutive 560 MHz channel, 2nd to 7th 80 MHz sub-channels are punctured respectively in order of frequency from low to high (or from high to low), 6 types of MRUs are constructed, for example: 6×996-tone MRU 8 to MRU 13.

If a 3rd 80 MHz sub-channel is first puncturing, and then in the remaining non-consecutive 560 MHz channel, 3rd to 7th 80 MHz sub-channels are punctured respectively in order of frequency from low to high (or from high to low), 5 types of MRUs are constructed, for example: 6×996-tone MRU 14 to MRU 18.

If a 4th 80 MHz sub-channel is first puncturing, and then in the remaining non-consecutive 560 MHz channel, 4ht to 7th 80 MHz sub-channels are punctured respectively in order of frequency from low to high (or from high to low), 4 types of MRUs are constructed, for example: 6×996-tone MRU 19 to MRU 22.

If a 5th 80 MHz sub-channel is first puncturing, and then in the remaining non-consecutive 560 MHz channel, 5th to 7th 80 MHz sub-channels are punctured respectively in order of frequency from low to high (or from high to low), 3 types of MRUs are constructed, for example: 6×996-tone MRU 23 to MRU 25.

If a 6th 80 MHz sub-channel is first puncturing, and then in the remaining non-consecutive 560MHz channel, 6th to 7th 80 MHz sub-channels are punctured respectively in order of frequency from low to high (or from high to low), 2 types of MRUs are constructed, for example: 6×996-tone MRU 26 to MRU 27.

If a 7th 80 MHz sub-channel is first puncturing, and then in the remaining non-consecutive 560MHz channel, 7th 80 MHz sub-channel is punctured respectively in order of frequency from low to high (or from high to low), 1 type of MRU is constructed, for example: 6×996-tone MRU 28.

In one case, the 6×996-tone MRU is used only for the non-OFDMA 640MHz UHR PPDU transmission.

In another case, the 6×996-tone MRU may be used for the non-OFDMA 640MHz UHR PPDU transmission and the OFDMA 640MHz UHR PPDU transmission.

Another example of the 6×996-tone MRU for the uplink or downlink PPDU transmission is as follows: for a 6×996-tone MRU, it is allowed to puncture one 160 MHz sub-channel in one 640MHz UHR PPDU. The 6×996-tone MRU is composed of six 996-tone RUs in one 640MHz UHR PPDU. In the 640 MHz bandwidth, 1st to 4th 160 MHz sub-channels are punctured respectively in order of frequency from low to high (or from high to low), to construct 4 types of MRUs, for example: 6×996-tone MRU 1 to MRU 4.

In one case, the 6×996-tone MRU is used only for the non-OFDMA 640MHz UHR PPDU transmission.

In another case, the 6×996-tone MRU may be used for the non-OFDMA 640MHz UHR PPDU transmission and the OFDMA 640MHz UHR PPDU transmission.

In one implementation, a data tone of the MRU is composed of a union of data tones of six 996-tone RUs constituting the MRU; and/or, a pilot tone of the MRU is composed of a union of pilot tones of six 996-tone RUs constituting the MRU.

For example, the data tone of the 6×996-tone MRU is composed of a union of data tones of six 996-tone RUs. For another example, the pilot tone of the 6×996-tone MRU is composed of a union of pilot tones of six 996-tone RUs.

In one implementation, the puncturing information is puncturing three 80 MHz sub-channels, and a puncturing method corresponding to the 640 MHz channel includes at least one of the following:
in the bandwidth of the 640 MHz channel, puncturing any three 80 MHz sub-channels to obtain 56 types of MRUs;
in the bandwidth of the 640 MHz channel, puncturing any one 160 MHz sub-channel and any one 80 MHz sub-channel to obtain 24 types of MRUs;
in the bandwidth of the 640 MHz channel, first puncturing a first 160 MHz sub-channel or a last 160 MHz sub-channel, and then puncturing any one 80 MHz sub-channel in a remaining bandwidth to obtain 12 types of MRUs;
where the MRU includes five 996-tone RUs.

An example of the 5×996-tone MRU for the uplink or downlink PPDU transmission is as follows: for a 5×996-tone MRU, it is allowed to puncture any three 80 MHz sub-channels in one 640MHz UHR PPDU. The 5×996-tone MRU is composed of five 996-tone RUs in one 640MHz UHR PPDU. There are 56 types of 5×996-tone MRUs in the 640MHz UHR PPDU.

If 1st and 2nd 80 MHz sub-channels are first punctured, and then in the remaining 480MHz channel, 1st to 6th 80 MHz sub-channels are punctured respectively in order of frequency from low to high (or from high to low), 6 types of MRUs are constructed, for example: 5×996-tone MRU 1 to MRU 6.

If 1st and 3rd 80 MHz sub-channels are first punctured, and then in the remaining non-consecutive 480 MHz channel, 2nd to 6th 80 MHz sub-channels are punctured respectively in order of frequency from low to high (or from high to low), 5 types of MRUs are constructed, for example: 5×996-tone MRU 7 to MRU 11.

If 1st and 4t 80 MHz sub-channels are first punctured, and then in the remaining non-consecutive 480 MHz channel, 3rd to 6th 80 MHz sub-channels are punctured respectively in order of frequency from low to high (or from high to low), 4 types of MRUs are constructed, for example: 5×996-tone MRU 12 to MRU 15.

If 1st and 5th 80 MHz sub-channels are first punctured, and then in the remaining non-consecutive 480 MHz channel, 4th to 6th 80 MHz sub-channels are punctured respectively in order of frequency from low to high (or from high to low), 3 types of MRUs are constructed, for example: 5×996-tone MRU 16 to MRU 18.

If 1st and 6th 80 MHz sub-channels are first punctured, and then in the remaining non-consecutive 480 MHz channel, 5th to 6th 80 MHz sub-channels are punctured respectively in order of frequency from low to high (or from high to low), 2 types of MRUs are constructed, for example: 5×996-tone MRU 19 to MRU 20.

If 1st and 7th 80 MHz sub-channels are first punctured, and then in the remaining non-consecutive 480 MHz channel, a 6th 80 MHz sub-channels is punctured in order of frequency from low to high (or from high to low), 1 type of MRU is constructed, for example: 5×996-tone MRU 21.

If 2nd and 3rd 80 MHz sub-channels are first punctured, and then in the remaining non-consecutive 480 MHz channel, 2nd to 6th 80 MHz sub-channels are punctured in order of frequency from low to high (or from high to low), 5 types of MRUs are constructed, for example: 5×996-tone MRU 22 to MRU 26.

If 2nd and 4th 80 MHz sub-channels are first punctured, and then in the remaining non-consecutive 480 MHz channel, 3rd to 6th 80 MHz sub-channels are punctured in order of frequency from low to high (or from high to low), 4 types of MRUs are constructed, for example: 5×996-tone MRU 27 to MRU 30.

If 2nd and 5th 80 MHz sub-channels are first punctured, and then in the remaining non-consecutive 480 MHz channel, 4th to 6th 80 MHz sub-channels are punctured in order of frequency from low to high (or from high to low), 3 types of MRUs are constructed, for example: 5×996-tone MRU 31 to MRU 33.

If 2nd and 6th 80 MHz sub-channels are first punctured, and then in the remaining non-consecutive 480 MHz channel, 5th to 6th 80 MHz sub-channels are punctured in order of frequency from low to high (or from high to low), 2 types of MRUs are constructed, for example: 5×996-tone MRU 34 to MRU 35.

If 2nd and 7th 80 MHz sub-channels are first punctured, and then in the remaining non-consecutive 480 MHz channel, a 6th 80 MHz sub-channel is punctured in order of frequency from low to high (or from high to low), 1 type of MRU is constructed, for example: 5×996-tone MRU 36.

If 3rd and 4th 80 MHz sub-channels are first punctured, and then in the remaining non-consecutive 480 MHz channel, 3rd to 6th 80 MHz sub-channels are punctured in order of frequency from low to high (or from high to low), 4 types of MRUs are constructed, for example: 5×996-tone MRU 37 to MRU 40.

If 3rd and 5th 80 MHz sub-channels are first punctured, and then in the remaining non-consecutive 480 MHz channel, 4th to 6th 80 MHz sub-channels are punctured in order of frequency from low to high (or from high to low), 3 types of MRUs are constructed, for example: 5×996-tone MRU 41 to MRU 43.

If 3rd and 6th 80 MHz sub-channels are first punctured, and then in the remaining non-consecutive 480 MHz channel, 5th to 6th 80 MHz sub-channels are punctured in order of frequency from low to high (or from high to low), 2 types of MRUs are constructed, for example: 5×996-tone MRU 44 to MRU 45.

If 3rd and 7th 80 MHz sub-channels are first punctured, and then in the remaining non-consecutive 480 MHz channel, a 6th 80 MHz sub-channel is punctured in order of frequency from low to high (or from high to low), 1 type of MRU is constructed, for example: 5×996-tone MRU 46.

If 4th and 5th 80 MHz sub-channels are first punctured, and then in the remaining non-consecutive 480 MHz channel, 4th to 6th 80 MHz sub-channels are punctured in order of frequency from low to high (or from high to low), 3 types of MRUs are constructed, for example: 5×996-tone MRU 47 to MRU 49.

If 4th and 6th 80 MHz sub-channels are first punctured, and then in the remaining non-consecutive 480 MHz channel, 5th to 6th 80 MHz sub-channels are punctured in order of frequency from low to high (or from high to low), 2 types of MRUs are constructed, for example: 5×996-tone MRU 50 to MRU 51.

If 4th and 7th 80 MHz sub-channels are first punctured, and then in the remaining non-consecutive 480 MHz channel, a 6th 80 MHz sub-channel is punctured in order of frequency from low to high (or from high to low), 1 type of MRU is constructed, for example: 5×996-tone MRU 52.

If 5th and 6th 80 MHz sub-channels are first punctured, and then in the remaining non-consecutive 480 MHz channel, 5th to 6th 80 MHz sub-channels are punctured in order of frequency from low to high (or from high to low), 2 types of MRUs are constructed, for example: 5×996-tone MRU 53 to MRU 54.

If 5th and 7th 80 MHz sub-channels are first punctured, and then in the remaining non-consecutive 480 MHz channel, a 6th 80 MHz sub-channel is punctured in order of frequency from low to high (or from high to low), 1 type of MRU is constructed, for example: 5×996-tone MRU 55.

If 6th and 7th 80 MHz sub-channels are first punctured, and then in the remaining non-consecutive 480 MHz channel, a 6th 80 MHz sub-channel is punctured in order of frequency from low to high (or from high to low), 1 type of MRU is constructed, for example: 5×996-tone MRU 56.

Another example of the 5×996-tone MRU for the uplink or downlink PPDU transmission is as follows: for a 5×996-tone MRU, it is allowed to first puncture any one 160 MHz sub-channel in one 640MHz UHR PPDU, and then puncture any one 80 MHz sub-channel in the remaining 480 MHz. The 5×996-tone MRU is composed of five 996-tone RUs in one 640MHz UHR PPDU. There are 24 types of 5×996-tone MRUs in total.

If a 160 MHz sub-channel composed of 1st and 2nd 80 MHz sub-channels is first punctured, and then in the remaining 480 MHz channel, 1st to 6th 80 MHz sub-channels are punctured respectively in order of frequency from low to high (or from high to low), 6 types of MRUs are constructed, for example: 5×996-tone MRU 1 to MRU 6.

If a 160 MHz sub-channel composed of 3rd and 4th 80 MHz sub-channels is first punctured, and then in the remaining non-consecutive 480 MHz channel, 1st to 6th 80 MHz sub-channels are punctured respectively in order of frequency from low to high (or from high to low), 6 types of MRUs are constructed, for example: 5×996-tone MRU 7 to MRU 12.

If a 160 MHz sub-channel composed of 5th and 6th 80 MHz sub-channels is first punctured, and then in the remaining non-consecutive 480 MHz channel, 1st to 6th 80 MHz sub-channels are punctured respectively in order of frequency from low to high (or from high to low), 6 types of MRUs are constructed, for example: 5×996-tone MRU 13 to MRU 18.

If a 160 MHz sub-channel composed of 7th and 8th 80 MHz sub-channels is first punctured, and then in the remaining 480 MHz channel, 1st to 6th 80 MHz sub-channels are punctured respectively in order of frequency from low to high (or from high to low), 6 types of MRUs are constructed, for example: 5×996-tone MRU 19 to MRU 24.

Another example of the 5×996-tone MRU for the uplink or downlink PPDU transmission is as follows: for a 5×996-tone MRU, it is allowed to puncture 1st or 4th 160 MHz sub-channels in one 640MHz UHR PPDU, and then puncture any one 80 MHz sub-channel in the remaining 480 MHz channel. The 5×996-tone MRU is composed of five 996-tone RUs in one 640MHz UHR PPDU. There are 12 types of 5×996-tone MRUs in total. For the 5×996-tone MRU 1 to MRU 6, a 4th 160 MHz sub-channel is first punctured, and then in the remaining 480 MHz bandwidth, 1st to 6th 80 MHz sub-channels are punctured respectively in order of frequency from low to high (or from high to low). For 5×996-tone MRU 7 to MRU 12, a 1st 160 MHz sub-channel is punctured first, and then in the remaining 480 MHz bandwidth, 1st to 6th 80 MHz sub-channels are punctured respectively in order of frequency from low to high (or from high to low).

In one case, the 5×996-tone MRU is used only for the non-OFDMA 640MHz UHR PPDU transmission.

In another case, the 5×996-tone MRU may be used for the non-OFDMA 640MHz UHR PPDU transmission and the OFDMA 640MHz UHR PPDU transmission.

In one implementation, a data tone of the MRU is composed of a union of data tones of five 996-tone RUs constituting the MRU; and/or, a pilot tone of the MRU is composed of a union of pilot tones of five 996-tone RUs constituting the MRU.

For example, the data tone of the 5×996-tone MRU is composed of a union of data tones of five 996-tone RUs. For another example, the pilot tone of the 5×996-tone MRU is composed of a union of pilot tones of five 996-tone RUs.

In one implementation, the MRU is used for a transmission of a PPDU with a bandwidth of 640 MHz, and the PPDU with the bandwidth of 640 MHz includes a non-OFDMA 640MHz UHR PPDU and/or an OFDMA 640MHz UHR PPDU.

In the embodiments of the present disclosure, the communication bandwidth may be extended and the spectrum utilization efficiency may be increased based on the large-size MRU.

For the large-size MRU constructed based on the 240 MHz bandwidth, a 220 MHz bandwidth is constructed by puncturing one 20 MHz sub-channel; and a 200MHz bandwidth is constructed by puncturing two 20 MHz sub-channels.

For the large-size MRU constructed based on the 480 MHz bandwidth, a **440** MHz bandwidth is constructed by puncturing one 40 MHz sub-channel; a 400MHz bandwidth is constructed by puncturing one 80 MHz sub-channel; and a 360MHz bandwidth is constructed by puncturing 40 MHz and 80 MHz sub-channels simultaneously.

For the large-size MRU constructed based on the 640 MHz bandwidth, a 560 MHz bandwidth is constructed by puncturing one 80 MHz sub-channel; for the 640 MHz, a 480MHz bandwidth is constructed by puncturing one 160 MHz sub-channel; and for the 640 MHz, a 400MHz bandwidth is constructed by puncturing one 160 MHz sub-channel and one 80 MHz sub-channel simultaneously.

FIG. 3 is a schematic block diagram of a station 300 in accordance with an embodiment of the present disclosure. The station 300 may include:
a processing unit 310, configured to acquire a transmission resource of a data packet, where the transmission resource of the data packet includes a multiple resource unit (MRU) divided based on a first channel.

In one implementation, the MRU is obtained by dividing the first channel based on puncturing information and/or a bandwidth of the first channel.

In one implementation, the puncturing information includes at least one of a puncturing granularity, a location of a punctured sub-channel, and a number of punctured sub-channels.

In one implementation, the data packet is an ultra-high reliability (UHR) physical layer protocol data unit (PPDU).

In one implementation, a bandwidth of the first channel is greater than a set bandwidth, and a size of the MRU is greater than a set size.

In one implementation, sub-channels of the first channel include a first sub-channel and at least one second sub-channel, where the first sub-channel is a primary channel, and the second sub-channel is a secondary channel.

In one implementation, the first channel is a 240 MHz channel, and the 240 MHz channel is a channel with a bandwidth of 240 MHz in a 5 GHz frequency band, or a channel with a bandwidth of 240 MHz in a 6 GHz frequency band.

In one implementation, the 240 MHz channel includes three adjacent 80 MHz channels.

In one implementation, the first sub-channel of the 240 MHz channel is a primary 80 MHz channel, the two second sub-channels are respectively a first secondary 80 MHz channel and a second secondary 80 MHz channel, and the primary 80 MHz channel includes a primary 20 MHz channel. Herein, the primary 80 MHz channel may represent a primary channel with a bandwidth of 80 MHz. The primary 20 MHz channel may represent a primary channel with a bandwidth of 20 MHz. The first secondary 80 MHz channel may represent a first secondary channel with a bandwidth of 80 MHz. The second secondary 80 MHz channel may represent a second secondary channel with a bandwidth of 80 MHz.

In one implementation, the first sub-channel of the 240 MHz channel is a primary 160 MHz channel, the second sub-channel is a secondary 80 MHz channel, and the primary 160 MHz channel includes a primary 20 MHz channel. The primary 160 MHz channel may represent a primary channel with a bandwidth of 160 MHz. The secondary 80 MHz channel may represent a secondary channel with a bandwidth of 80 MHz.

In one implementation, the puncturing information is puncturing one 20 MHz sub-channel, and a puncturing method of the 240 MHz channel includes: in the bandwidth of the 240 MHz channel, puncturing 1st to 12th 20 MHz sub-channels respectively in order of frequency to obtain 12 types of MRUs, and the MRU includes two 996-tone RUs, one 484-tone RU and one 242-tone RU.

In one implementation, a data tone of the MRU is composed of a union of data tones of two 996-tone RUs, one 484-tone RU and one 242-tone RU constituting the MRU; and/or, a pilot tone of the MRU is composed of a union of pilot tones of two 996-tone RUs, one 484-tone RU and one 242-tone RU constituting the MRU.

In one implementation, puncturing information is puncturing one 40 MHz sub-channel, and a puncturing method of the 240 MHz channel includes: in the bandwidth of the 240 MHz channel, puncturing 1st to 6th 40 MHz sub-channels respectively in order of frequency to obtain 6 types of MRUs, and the MRU includes two 996-tone RUs and one 484-tone RU.

In one implementation, a data tone of the MRU is composed of a union of data tones of two 996-tone RUs and one 484-tone RU constituting the MRU; and/or, a pilot tone of the MRU is composed of a union of pilot tones of two 996-tone RUs and one 484-tone RU constituting the MRU.

In one implementation, the MRU is used for a transmission of a PPDU with a bandwidth of 240 MHz, and the PPDU with the bandwidth of 240 MHz includes a non-OFDMA 240MHz UHR PPDU and/or an OFDMA 240MHz UHR PPDU.

In one implementation, the first channel is a 480 MHz channel, and the 480 MHz channel is a channel with a bandwidth of 480 MHz in a 5 GHz frequency band, or a channel with a bandwidth of 480 MHz in a 6 GHz frequency band.

In one implementation, the 480 MHz channel includes three adjacent 160 MHz channels.

In one implementation, the first sub-channel of the 480 MHz channel is a primary 320 MHz channel, the two second sub-channels are respectively a first secondary 80 MHz channel and a second secondary 80 MHz channel, and the primary 320 MHz channel includes a primary 20 MHz channel.

In one implementation, a channel center frequency index of a first type of the 480 MHz channel is 47 or 143; or, a channel center frequency index of a second type of the second 480 MHz channel is 79 or 175.

In one implementation the puncturing information is puncturing one 40 MHz sub-channel, and a puncturing method corresponding to the 480 MHz channel includes: in the bandwidth of the 480 MHz channel, puncturing 1st to 12th 40 MHz sub-channels respectively in order of frequency to obtain 12 types of MRUs, and the MRU includes five 996-tone RUs and one 484-tone RU.

In one implementation, a data tone of the MRU is composed of a union of data tones of five 996-tone RUs and one 484-tone RU constituting the MRU; and/or, a pilot tone of the MRU is composed of a union of pilot tones of five 996-tone RUs and one 484-tone RU constituting the MRU.

In one implementation, the puncturing information is puncturing one 80 MHz sub-channel, and a puncturing method corresponding to the 480 MHz channel includes: in the bandwidth of the 480 MHz channel, puncturing 1st to 6th 80 MHz sub-channels respectively in order of frequency to obtain 6 types of MRUs, and the MRU includes five 996-tone RUs.

In one implementation, a data tone of the MRU is composed of a union of data tones of five 996-tone RUs constituting the MRU; and/or, a pilot tone of the MRU is composed of a union of pilot tones of five 996-tone RUs constituting the MRU.

In one implementation, the puncturing information is puncturing one 80 MHz sub-channel and one 40 MHz sub-channel, and a puncturing method corresponding to the 480 MHz channel includes at least one of the following::
in the bandwidth of the 480 MHz channel, first puncturing any one 80 MHz sub-channel, and then puncturing any one 40 MHz sub-channel in a remaining bandwidth to obtain 60 types of MRUs;
in the bandwidth of the 480 MHz channel, first puncturing a first 80 MHz sub-channel or a last 80 MHz sub-channel, and then puncturing any one 40 MHz sub-channel in a remaining bandwidth to obtain 20 types of MRUs;
where the MRU includes four 996-tone RUs and one 484-tone RU.

In one implementation, a data tone of the MRU is composed of a union of data tones of four 996-tone RUs and one 484-tone RU constituting the MRU; and/or, a pilot tone of the MRU is composed of a union of pilot tones of four 996-tone RUs and one 484-tone RU constituting the MRU.

In one implementation, the MRU is used for a transmission of a PPDU with a bandwidth of 480 MHz, and the PPDU with the bandwidth of 480 MHz includes a non-OFDMA 480MHz UHR PPDU and/or an OFDMA 480MHz UHR PPDU.

In one implementation, the first channel is a 640 MHz channel, and the 640 MHz channel is a channel with a bandwidth of 640 MHz in a 5 GHz frequency band, or a channel with a bandwidth of 640 MHz in a 6 GHz frequency band.

In one implementation, the 640 MHz channel includes four adjacent 160 MHz channels.

In one implementation, the first sub-channel of the 640 MHz channel is a primary 320 MHz channel, the second sub-channel is a secondary 320 MHz channel, and the primary 320 MHz channel includes a primary 20 MHz channel.

In one implementation, a channel center frequency index of a first kind of the 640 MHz channel is 63, and a channel center frequency index of a second kind of the 640 MHz channel is 159.

In one implementation, the puncturing information is puncturing one 80 MHz sub-channel, and a puncturing method corresponding to the 640 MHz channel includes: in the bandwidth of the 640 MHz channel, puncturing 1st to 8th 80 MHz sub-channels respectively in order of frequency to obtain 8 types of MRUs, and the MRU includes seven 996-tone RUs.

In one implementation, a data tone of the MRU is composed of a union of data tones of seven 996-tone RUs constituting the MRU; and/or, a pilot tone of the MRU is composed of a union of pilot tones of seven 996-tone RUs constituting the MRU.

In one implementation, the puncturing information is puncturing two 80 MHz sub-channels, and a puncturing method corresponding to the 640 MHz channel includes at least one of the following:
in the bandwidth of the 640 MHz channel, puncturing any two 80 MHz sub-channels to obtain 28 types of MRUs;
in the bandwidth of the 640 MHz channel, starting from a first 160 MHz sub-channel, puncturing one 160 MHz sub-channel in sequence to obtain 28 types of MRUs;
where the MRU includes six 996-tone RUs.

In one implementation, a data tone of the MRU is composed of a union of data tones of six 996-tone RUs constituting the MRU; and/or, a pilot tone of the MRU is composed of a union of pilot tones of six 996-tone RUs constituting the MRU.

In one implementation, the puncturing information is puncturing three 80 MHz sub-channels, and a puncturing method corresponding to the 640 MHz channel includes at least one of the following:
in the bandwidth of the 640 MHz channel, puncturing any three 80 MHz sub-channels to obtain 56 types of MRUs;
in the bandwidth of the 640 MHz channel, puncturing any one 160 MHz sub-channel and any one 80 MHz sub-channel to obtain 24 types of MRUs;
in the bandwidth of the 640 MHz channel, first puncturing a first 160 MHz sub-channel or a last 160 MHz sub-channel, and then puncturing any one 80 MHz sub-channel in a remaining bandwidth to obtain 12 types of MRUs;
where the MRU includes five 996-tone RUs.

In one implementation, a data tone of the MRU is composed of a union of data tones of five 996-tone RUs constituting the MRU; and/or, a pilot tone of the MRU is composed of a union of pilot tones of five 996-tone RUs constituting the MRU.

In one implementation, the MRU is used for a transmission of a PPDU with a bandwidth of 640 MHz, and the PPDU with the bandwidth of 640 MHz includes a non-OFDMA 640MHz UHR PPDU and/or an OFDMA 640MHz UHR PPDU.

The station 300 in the embodiments of the present disclosure can implement the corresponding functions of the station in the embodiments of the method 200 mentioned above. The procedures, functions, implementations and beneficial effects corresponding to various modules (sub-modules, units or components, etc.) in the station 300 may be found in the corresponding description in the embodiments of the method 200 mentioned above, which will not be repeated here. It should be noted that the functions described with respect to the various modules (sub-modules, units or components, etc.) in the station 300 of the embodiments of the disclosure may be implemented by different modules (sub-modules, units or components, etc.), or may also be implemented by a same module (sub-module, unit or component, etc.).

The embodiments of the present disclosure are applicable to the next generation of Wi-Fi communications, such as ultra-high reliability (Ultra-High Reliability, UHR). Based on new channel bandwidths, such as 240 MHz, 480 MHz, and 640 MHz, new UHR PPDUs may be provided. The UHR PPDU may include an MRU type for the UHR modulation field, for example:
(1) A UHR PPDU may include a UHR MU PPDU and a UHR TB PPDU.
(2) Based on 240 MHz, 480 MHz and 640 MHz bandwidths, a large-size MRU is designed, which may be used for the non-OFDMA transmission and/or the OFDMA transmission.

### 1. UHR PPDU

There are two forms of the UHR PPDU: UHR MU PPDU and UHR TB PPDU.

### (1) UHR MU PPDU

A format of the UHR MU PPDU is shown in FIG. 4, and is used to transmit to one or more users. Here, an L-STF field is mainly used for signal detection, automatic gain control, time synchronization and coarse frequency offset estimation; an L-LTF field is mainly used for channel estimation and further frequency offset estimation; an L-SIG field is used to transmit rate and length information; RL-SIG is a repetition of L-SIG; U-SIG and UHR-SIG fields are used to carry information for decoding the PPDU; a UHR-STF field is used to improve automatic gain control estimation in an MIMO transmission; UHR-LTF is used for MIMO channel estimation from constellation mapping output to the receiving link; a Data field transmits information; and a PE field is an extension of a packet. In the UHR MU PPDU, L-STF, L-LTF, L-SIG, U-SIG and UHR-SIG are called pre-UHR modulation fields; UHR-STF, UHR-LTF, Data and PE are called UHR modulation fields.

### (2) UHR TB PPDU

A format of the UHR TB PPDU is shown in FIG. 5, and is used to transmit a response trigger frame from an AP. In the UHR TB PPDU, L-STF, L-LTF, L-SIG and U-SIG are called pre-UHR modulation fields; UHR-STF, UHR-LTF, Data and PE are called UHR modulation fields. The duration of the UHR-STF field in the UHR TB PPDU is twice the duration of the UHR-STF field in the UHR MU PPDU.

### 2. Large-size MRU design based on 240 MHz, 480 MHz and 640 MHz

The UHR PHY (Physical Layer) supports the use of MRU in a UHR PPDU. The embodiments of the present disclosure design a large-size MRU for the newly added 240 MHz, 480 MHz and 640 MHz bandwidths of the UHR PHY.
(1) The following table shows an example of a correspondence between the bandwidth and the RU size.

| Bandwidth | RU size |
|---|---|
| 20 MHz | 242-tone |
| 40 MHz | 484-tone |
| 80 MHz | 996-tone |
| 160 MHz | 2×996-tone |
| 240 MHz | 3×996-tone |
| 320 MHz | 4×996-tone |
| 480 MHz | 6×996-tone |
| 640 MHz | 9×996-tone |

(2) 240 MHz bandwidth for constructing an MRU

A puncturing granularity of a 240 MHz channel is 20 MHz. For the 240 MHz channel, a 2×996+484+242-tone MRU is constructed by puncturing one 20 MHz sub-channel. For the 240 MHz channel, a 2×996+484-tone MRU is constructed by puncturing one 40 MHz sub-channel. The details are as follows.

### (a) 2×996+484+242-tone MRU

For the 240 MHz channel, a 2×996+484+242-tone MRU is constructed by puncturing one 20 MHz sub-channel.

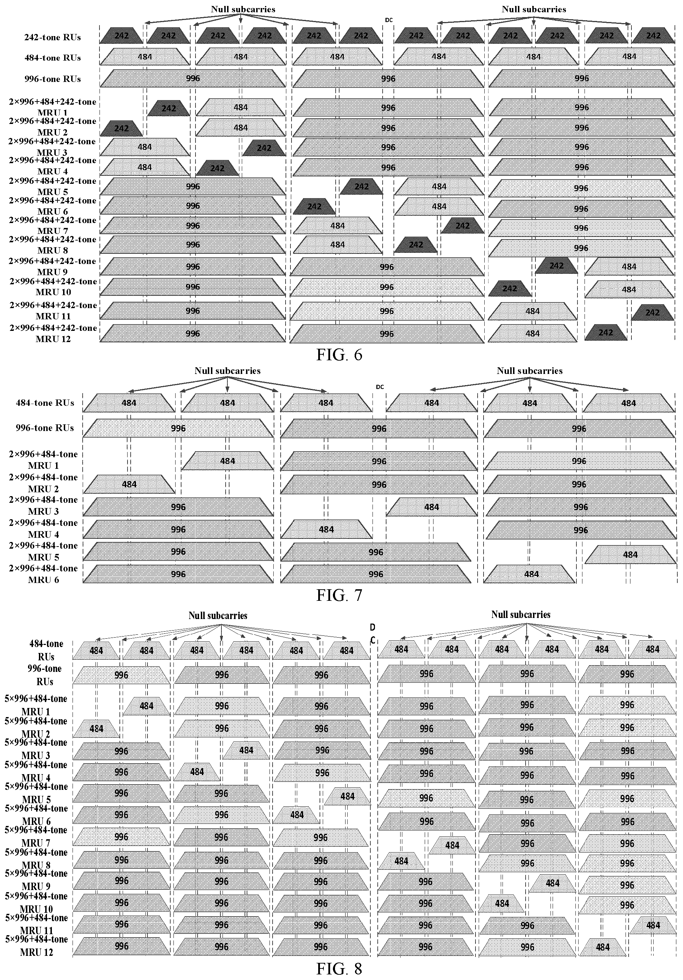

For the 2×996+484+242-tone MRU, it is allowed to puncture one 20 MHz sub-channel in one 240MHz UHR PPDU. The 2×996+484+242-tone MRU is composed of two 996-tone RUs, one 484-tone RU, and one 242-tone RU in one 240MHz UHR PPDU. A data tone of the 2×996+484+242-tone MRU is composed of a union of data tones of two 996-tone RUs, a 484-tone RU and a 242-tone RU constituting the 2×996+484+242-tone MRU. A pilot tone of the 2×996+484+242-tone MRU is composed of a union of pilot tones of two 996-tone RUs, a 484-tone RU and a 242-tone RU constituting the 2×996+484+242-tone MRU. There are 12 types of 2×996+484+242-tone MRUs in the 240MHz UHR PPDU. In the 240 MHz bandwidth, 1st to 12th 20 MHz sub-channels are punctured respectively in order of frequency from low to high, to construct 2×996+484+242-tone MRU 1 to MRU 12, as shown in FIG. 6. In addition, in various examples of the present disclosure, the puncturing may also be performed in order of frequency from high to low, and the principle of puncturing in order of frequency from high to low is similar to that of puncturing in order of frequency from low to high, which will not be repeated here. FIG. 6 also includes null subcarries (Null subcarriers). In the embodiments of the present disclosure, the pilot tones participate in the construction of RU or MRU, and the null subcarries do not participate in the construction of RU or MRU. The null subcarries are located near direct current (Direct Current, DC) tones or edge tones, to provide protection from transmit center frequency leakage, receiver DC offset, and interference from neighboring RU(s) or MRU(s). The energy of null subcarriers is 0, and the energy of the punctured tones is also 0.

### Example 1:

To reduce the implementation and testing complexity, a 2×996+484+242-tone MRU may be used only for the non-OFDMA 240MHz UHR PPDU transmission.

### Example 2:

The 2×996+484+242-tone MRU may be used for the non-OFDMA 240MHz UHR PPDU transmission and the OFDMA 240MHz UHR PPDU transmission.

### (b) 2×996+484-tone MRU

For a 240 MHz channel, a 2×996+484-tone MRU is constructed by puncturing one 40 MHz sub-channel.

For the 2×996+484-tone MRU, it is allowed to puncture one 40 MHz sub-channel in one 240MHz UHR PPDU. The 2×996+484-tone MRU is composed of two 996-tone RUs and one 484-tone RU in one 240MHz UHR PPDU. A data tone of the 2×996+484-tone MRU is composed of a union of data tones of two 996-tone RUs and one 484-tone RU constituting the 2×996+484-tone MRU. A pilot tone of the 2×996+484-tone MRU is composed of a union of pilot tones of two 996-tone RUs and one 484-tone RU constituting the 2×996+484-tone MRU. There are six types of 2×996+484-tone MRUs in the 240MHz UHR PPDU. In the 240 MHz bandwidth, 1st to 6th 40 MHz sub-channels are punctured respectively in order of frequency from low to high, to construct 2×996+484-tone MRU 1 to MRU 6, as shown in FIG. 7.

### Example 4:

To reduce the implementation and testing complexity, the 2×996+484-tone MRU may be used only for the non-OFDMA 240MHz UHR PPDU transmission.

### Example 5:

The 2×996+484-tone MRU may be used for the non-OFDMA 240MHz UHR PPDU transmission and the OFDMA 240MHz UHR PPDU transmission.

### (3) 480 MHz bandwidth for constructing an MRU

A puncturing granularity of a 480 MHz channel is 40 MHz. For the 480 MHz channel, a 5×996+484-tone MRU is constructed by puncturing one 40 MHz sub-channel. For the 480 MHz channel, a 5×996-tone MRU is constructed by puncturing one 80 MHz sub-channel. For the 480 MHz channel, a 4×996+484-tone MRU is constructed by simultaneously puncturing one 80 MHz sub-channel and one 40 MHz sub-channel. The details are as follows.

### (a) 5×996+484-tone MRU

For the 480 MHz channel, a 5×996+484-tone MRU is constructed by puncturing one 40 MHz sub-channel.

For a 5×996+484-tone MRU, it is allowed to puncture one 40 MHz sub-channel in one 480MHz UHR PPDU. The 5×996+484-tone MRU is composed of five 996-tone RUs and one 484-tone RU in one 480MHz UHR PPDU. A data tone of the 5×996+484-tone MRU is composed of a union of data tones of five 996-tone RUs and a 484-tone RU constituting the 5×996+484-tone MRU. A pilot tone of the 5×996+484-tone MRU is composed of a union of pilot tones of five 996-tone RUs and a 484-tone RU constituting the 5×996+484-tone MRU. There are 12 types of 5×996+484-tone MRUs in the 480MHz UHR PPDU. In the 480 MHz bandwidth, 1st to 12th 40 MHz sub-channels are punctured respectively in order of frequency from low to high, to construct 5×996+484-tone MRU 1 to MRU 12, as shown in FIG. 8.

### Example 6:

To reduce the implementation and testing complexity, the 5×996+484-tone MRU may be used only for the non-OFDMA 480MHz UHR PPDU transmission.

### Example 7:

The 5×996+484-tone MRU may be used for the non-OFDMA 480MHz UHR PPDU transmission and the OFDMA 480MHz UHR PPDU transmission.

### (b) 5×996-tone MRU

For a 480 MHz channel, a 5×996-tone MRU is constructed by puncturing one 80 MHz sub-channel.

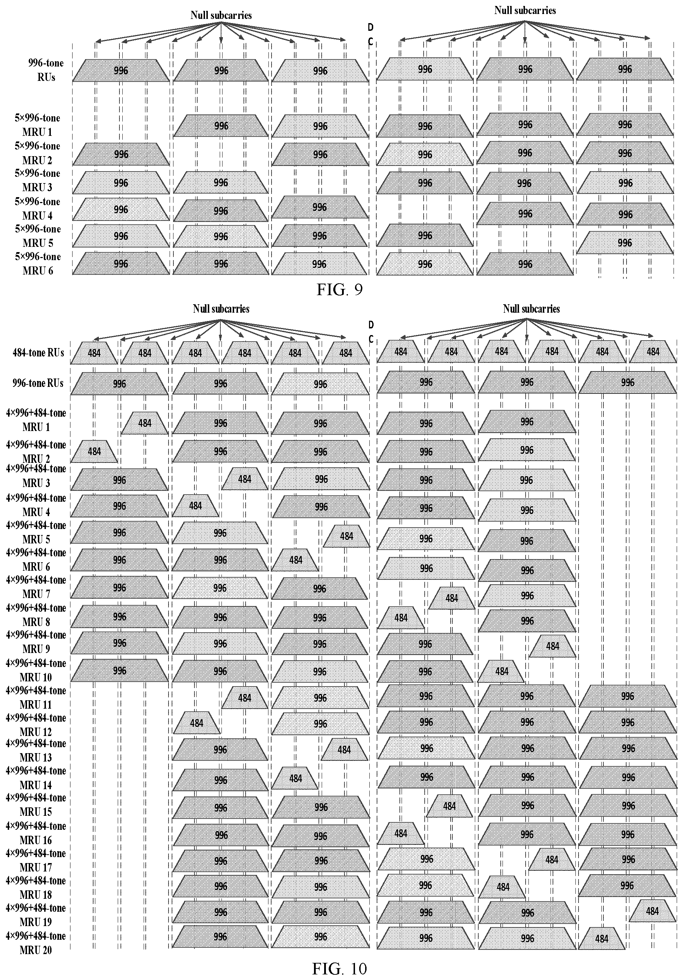

For the 5×996-tone MRU, it is allowed to puncture one 80 MHz sub-channel in one 480MHz UHR PPDU. The 5×996-tone MRU is composed of five 996-tone RUs in one 480MHz UHR PPDU. A data tone of the 5×996-tone MRU is composed of a union of data tones of five 996-tone RUs constituting the 5×996-tone MRU. A pilot tone of the 5×996-tone MRU is composed of a union of pilot tones of five 996-tone RUs constituting the 5×996-tone MRU. There are 6 types of 5×996-tone MRUs in the 480MHz UHR PPDU. In the 480 MHz bandwidth, 1st to 6th 80 MHz sub-channels are punctured respectively in order of frequency from low to high, to construct 5×996-tone MRU 1 to MRU 6, as shown in FIG. 9.

### Example 8

To reduce the implementation and testing complexity, the 5×996-tone MRU may be used only for the non-OFDMA 480MHz UHR PPDU transmission.

### Example 9

The 5×996-tone MRU may be used for the non-OFDMA 480MHz UHR PPDU transmission and the OFDMA 480MHz UHR PPDU transmission.

### (c) 4×996+484-tone MRU

For the 4×996+484-tone MRU, a 4×996+484-tone MRU is constructed by puncturing one 80 MHz sub-channel and one 40 MHz sub-channel simultaneously.

In order to balance the spectrum utilization efficiency and the implementation and testing complexity, the embodiments of the present disclosure propose two options according to the restriction condition of the punctured sub-channels.

Option 1: any one 80 MHz sub-channel and any one 40 MHz sub-channel are punctured to construct 60 types of 4×996+484-tone MRUs.

Option 2: 1st or 6th 80 MHz sub-channel is first punctured, and then in the remaining 400 MHz, any one 40 MHz sub-channel is punctured, to construct 20 types of 4×996+484-tone MRUs.

### Option 1 (60 types, any one 80 MHz sub-channel and any one 40 MHz sub-channel are punctured)

Considering the spectrum utilization efficiency, for the 4×996+484-tone MRU, it is allowed to first puncture any one 80 MHz in one 480MHz UHR PPDU, and then puncture any one 40 MHz sub-channel in the remaining 400 MHz. The 4×996+484-tone MRU is composed of four 996-tone RUs and one 484-tone RU in one 480MHz UHR PPDU. A data tone of the 4×996+484-tone MRU is composed of a union of data tones of four 996-tone RUs and one 484-tone RU constituting the 4×996+484-tone MRU. A pilot tone of the 4×996+484-tone MRU is composed of a union of pilot tones of four 996-tone RUs and one 484-tone RU constituting the 4×996+484-tone MRU. There are 60 types of 4×996+484-tone MRUs in the 480MHz UHR PPDU.

If a 1st 80 MHz sub-channel is first punctured, and then in the remaining 400 MHz channel, 1st to 10th 40 MHz sub-channels are punctured respectively in order of frequency from low to high, 10 types of MRUs are constructed, for example: 4×996+484-tone MRU 1 to MRU 10.

If a 2nd 80 MHz sub-channel is first puncturing, and then in the remaining non-consecutive 400 MHz channel, 1st to 10th 40 MHz sub-channels are punctured respectively in order of frequency from low to high, 10 types of MRUs are constructed, for example: 4×996+484-tone MRU 11 to MRU 20.

If a 3rd 80 MHz sub-channel is first puncturing, and then in the remaining non-consecutive 400 MHz channel, 1st to 10th 40 MHz sub-channels are punctured respectively in order of frequency from low to high, 10 types of MRUs are constructed, for example: 4×996+484-tone MRU 21 to MRU 30.

If a 4th 80 MHz sub-channel is first puncturing, and then in the remaining non-consecutive 400 MHz channel, 1st to 10th 40 MHz sub-channels are punctured respectively in order of frequency from low to high, 10 types of MRUs are constructed, for example: 4×996+484-tone MRU 31 to MRU 40.

If a 5th 80 MHz sub-channel is first puncturing, and then in the remaining non-consecutive 400 MHz channel, 1st to 10th 40 MHz sub-channels are punctured respectively in order of frequency from low to high, 10 types of MRUs are constructed, for example: 4×996+484-tone MRU 41 to MRU 50.

If a 6th 80 MHz sub-channel is first puncturing, and then in the remaining 400 MHz channel, 1st to 10th 40 MHz sub-channels are punctured respectively in order of frequency from low to high, 10 types of MRUs are constructed, for example: 4×996+484-tone MRU 51 to MRU 60.

Option 2 (20 options, 1st or 6th 80 MHz sub-channel is first punctured, and then in the remaining 400 MHz, any one 40 MHz sub-channel is punctured)

Considering the implementation and testing complexity, for the 4×996+484-tone MRU, it is allowed to puncture a 1st or 6th 80 MHz sub-channel in one 480MHz UHR PPDU, and then puncture any one 40 MHz sub-channel in the remaining 400 MHz. The 4×996+484-tone MRU is composed of four 996-tone RUs and one 484-tone RU in one 480MHz UHR PPDU. A data tone of the 4×996+484-tone MRU is composed of a union of data tones of four 996-tone RUs and one 484-tone RU constituting the 4×996+484-tone MRU. A pilot tone of the 4×996+484-tone MRU is composed of a union of pilot tones of four 996-tone RUs and one 484-tone RU constituting the 4×996+484-tone MRU. There are 20 types of 4×996+484-tone MRUs in the 480MHz UHR PPDU, as shown in FIG. 10. If any one of 4×996+484-tone MRU 1 to 4×996+484-tone MRU 10 exists, a 6th 80 MHz sub-channel should be punctured. If any one of 4×996+484-tone MRU 11 to 4×996+484-tone MRU 20 exists, a 1st 80 MHz sub-channel should be punctured.

### Example 10:

To reduce the implementation and testing complexity, the 4×996+484-tone MRU may be used only for the non-OFDMA 480MHz UHR PPDU transmission.

### Example 11:

The 4×996+484-tone MRU may be used for the non-OFDMA 480MHz UHR PPDU transmission and the OFDMA 480MHz UHR PPDU transmission.

### (4) 640 MHz bandwidth for constructing an MRU

A puncturing granularity of a 640 MHz channel is 80 MHz. For the 640 MHz channel, a 7×996-tone MRU is constructed by puncturing one 80 MHz sub-channel. For the 640 MHz channel, a 6×996-tone MRU is constructed by puncturing two 80 MHz sub-channels. For the 640 MHz channel, a 5×996-tone MRU is constructed by simultaneously puncturing three 80 MHz sub-channels. The details are as follows.

### (a) 7×996-tone MRU

For the 640 MHz channel, a 7×996-tone MRU is constructed by puncturing one 80 MHz sub-channel.

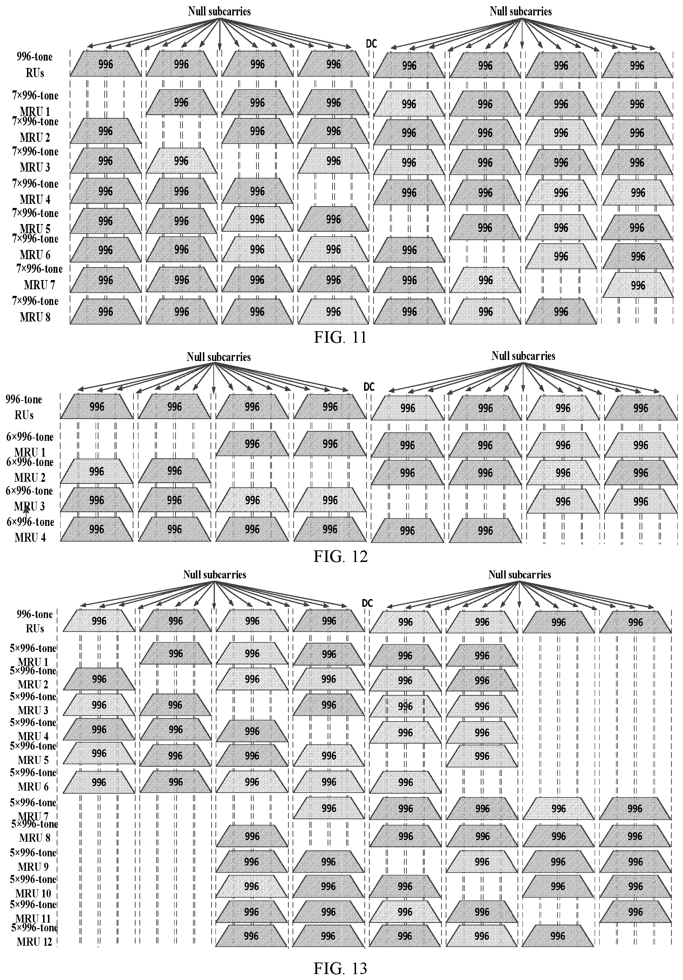

For the 7×996-tone MRU, it is allowed to puncture one 80 MHz sub-channel in one 640MHz UHR PPDU. The 7×996-tone MRU is composed of seven 996-tone RUs in one 640MHz UHR PPDU. A data tone of the 7×996-tone MRU is composed of a union of data tones of seven 996-tone RUs constituting the 7×996-tone MRU. A pilot tone of the 7×996-tone MRU is composed of a union of pilot tones of seven 996-tone RUs constituting the 7×996-tone MRU. There are 8 types of 7×996-tone MRUs in the 640MHz UHR PPDU. In the 640 MHz bandwidth, 1st to 8th 80 MHz sub-channels are punctured respectively in order of frequency from low to high, to construct 7×996-tone MRU 1 to MRU 8, as shown in FIG. 11.

### Example 12:

To reduce the implementation and test complexity, the 7×996-tone MRU may be used only for the non-OFDMA 640MHz UHR PPDU transmission.

### Example 13:

The 7×996-tone MRU may be used for the non-OFDMA 640MHz UHR PPDU transmission and the OFDMA 640MHz UHR PPDU transmission.

### (b) 6×996-tone MRU

For the 640 MHz channel, a 6×996-tone MRU is constructed by puncturing two 80 MHz sub-channels.

In order to balance the spectrum utilization efficiency and the implementation and testing complexity, the embodiments of the present disclosure propose two options according to the restriction condition of the punctured sub-channels.

Option 1:any two 80 MHz sub-channels are punctured to construct 28 types of 6×996-tone MRUs.

Option 2: starting from a 1st 160 MHz sub-channel, one 160 MHz sub-channel is punctured in sequence, to construct 4 types of 6×996-tone MRUs.

### Option 1 (28 types, any two 80 MHz sub-channels are punctured)

Considering the spectrum utilization efficiency, for the 6×996-tone MRU, it is allowed to puncture any two 80 MHz sub-channels in one 640MHz UHR PPDU. The 6×996-tone MRU is composed of six 996-tone RUs in one 640MHz UHR PPDU. A data tone of the 6×996-tone MRU is composed of a union of data tones of six 996-tone RUs constituting the 6×996-tone MRU. A pilot tone of the 6×996-tone MRU is composed of a union of pilot tones of six 996-tone RUs constituting the 6×996-tone MRU. There are 28 types of 6×996-tone MRUs in the 640MHz UHR PPDU.

If a 1st 80 MHz sub-channel is first punctured, and then in the remaining non-consecutive 560MHz channel, 1st to 7th 80 MHz sub-channels are punctured respectively in order of frequency from low to high, 7 types of MRUs are constructed, for example: 6×996-tone MRU 1 to MRU 7.

If a 2nd 80 MHz sub-channel is first puncturing, and then in the remaining non-consecutive 560 MHz channel, 2nd to 7th 80 MHz sub-channels are punctured respectively in order of frequency from low to high, 6 types of MRUs are constructed, for example: 6×996-tone MRU 8 to MRU 13.

If a 3rd 80 MHz sub-channel is first puncturing, and then in the remaining non-consecutive 560 MHz channel, 3rd to 7th 80 MHz sub-channels are punctured respectively in order of frequency from low to high, 5 types of MRUs are constructed, for example: 6×996-tone MRU 14 to MRU 18.

If a 4th 80 MHz sub-channel is first puncturing, and then in the remaining non-consecutive 560 MHz channel, 4ht to 7th 80 MHz sub-channels are punctured respectively in order of frequency from low to high, 4 types of MRUs are constructed, for example: 6×996-tone MRU 19 to MRU 22.

If a 5th 80 MHz sub-channel is first puncturing, and then in the remaining non-consecutive 560 MHz channel, 5th to 7th 80 MHz sub-channels are punctured respectively in order of frequency from low to high, 3 types of MRUs are constructed, for example: 6×996-tone MRU 23 to MRU 25.

If a 6th 80 MHz sub-channel is first puncturing, and then in the remaining non-consecutive 560MHz channel, 6th to 7th 80 MHz sub-channels are punctured respectively in order of frequency from low to high, 2 types of MRUs are constructed, for example: 6×996-tone MRU 26 to MRU 27.

If a 7th 80 MHz sub-channel is first puncturing, and then in the remaining non-consecutive 560MHz channel, 7th 80 MHz sub-channel is punctured respectively in order of frequency from low to high, 1 type of MRU is constructed, for example: 6×996-tone MRU 28.

### Option 2 (4 types, starting from a 1st 160 MHz sub-channel, one 160 MHz sub-channel is punctured in sequence)

Considering the implementation and testing complexity, for the 6×996-tone MRU, it is allowed to puncture one 160 MHz sub-channel in one 640MHz UHR PPDU. A data tone of the 6×996-tone MRU is composed of a union of data tones of six 996-tone RUs constituting the 6×996-tone MRU. A pilot tone of the 6×996-tone MRU is composed of a union of pilot tones of six 996-tone RUs constituting the 6×996-tone MRU. There are 4 types of 6×996-tone MRUs in the 640MHz UHR PPDU. In the 640 MHz bandwidth, starting from a 1st 160 MHz sub-channel, 1st to 4th 160 MHz sub-channels are punctured respectively in order of frequency from low to high, to construct 6×996-tone MRU 1 to MRU 4, as shown in FIG. 12.

### Example 14:

To reduce the implementation and testing complexity, the 6×996-tone MRU may be used only for the non-OFDMA 640MHz UHR PPDU transmission.

### Example 15:

The 6×996-tone MRU may be used for the non-OFDMA 640MHz UHR PPDU transmission and the OFDMA 640MHz UHR PPDU transmission.

### (c) 5×996-tone MRU

For the 640 MHz channel, a 5×996-tone MRU is constructed by puncturing three 80 MHz sub-channels.

In order to balance the spectrum utilization efficiency and the implementation and testing complexity, the embodiments of the present disclosure propose three options according to the restriction condition of the punctured sub-channels.

Option 1: any three 80 MHz sub-channels are punctured to construct 56 types of 5×996-tone MRUs.

Option 2: any one 160 MHz sub-channel and any one 80 MHz sub-channel are punctured to construct 24 types of 5×996-tone MRUs.

Option 3: a 1st or 4th 160 MHz sub-channel is first punctured, and then any one 80 MHz sub-channel in the remaining 480 MHz is punctured to construct 12 types of 5×996-tone MRUs.

### Option 1 (56 types, any three 80 MHz sub-channels are punctured)

Considering the spectrum utilization efficiency, for the 5×996-tone MRU, it is allowed to puncture any three 80 MHz sub-channels in one 640MHz UHR PPDU. The 5×996-tone MRU is composed of five 996-tone RUs in one 640MHz UHR PPDU. A data tone of the 5×996-tone MRU is composed of a union of data tones of five 996-tone RUs constituting the 5×996-tone MRU. A pilot tone of the 5×996-tone MRU is composed of a union of pilot tones of five 996-tone RUs constituting the 5×996-tone MRU. There are 56 types of 5×996-tone MRUs in the 640MHz UHR PPDU.

If 1st and 2nd 80 MHz sub-channels are first punctured, and then in the remaining 480MHz channel, 1st to 6th 80 MHz sub-channels are punctured respectively in order of frequency from low to high, 6 types of MRUs are constructed, for example: 5×996-tone MRU 1 to MRU 6.

If 1st and 3rd 80 MHz sub-channels are first punctured, and then in the remaining non-consecutive 480 MHz channel, 2nd to 6th 80 MHz sub-channels are punctured respectively in order of frequency from low to high, 5 types of MRUs are constructed, for example: 5×996-tone MRU 7 to MRU 11.

If 1st and 4t 80 MHz sub-channels are first punctured, and then in the remaining non-consecutive 480 MHz channel, 3rd to 6th 80 MHz sub-channels are punctured respectively in order of frequency from low to high, 4 types of MRUs are constructed, for example: 5×996-tone MRU 12 to MRU 15.

If 1st and 5th 80 MHz sub-channels are first punctured, and then in the remaining non-consecutive 480 MHz channel, 4th to 6th 80 MHz sub-channels are punctured respectively in order of frequency from low to high, 3 types of MRUs are constructed, for example: 5×996-tone MRU 16 to MRU 18.

If 1st and 6th 80 MHz sub-channels are first punctured, and then in the remaining non-consecutive 480 MHz channel, 5th to 6th 80 MHz sub-channels are punctured respectively in order of frequency from low to high, 2 types of MRUs are constructed, for example: 5×996-tone MRU 19 to MRU 20.

If 1st and 7th 80 MHz sub-channels are first punctured, and then in the remaining non-consecutive 480 MHz channel, a 6th 80 MHz sub-channels is punctured in order of frequency from low to high, 1 type of MRU is constructed, for example: 5×996-tone MRU 21.

If 2nd and 3rd 80 MHz sub-channels are first punctured, and then in the remaining non-consecutive 480 MHz channel, 2nd to 6th 80 MHz sub-channels are punctured in order of frequency from low to high, 5 types of MRUs are constructed, for example: 5×996-tone MRU 22 to MRU 26.

If 2nd and 4th 80 MHz sub-channels are first punctured, and then in the remaining non-consecutive 480 MHz channel, 3rd to 6th 80 MHz sub-channels are punctured in order of frequency from low to high, 4 types of MRUs are constructed, for example: 5×996-tone MRU 27 to MRU 30.

If 2nd and 5th 80 MHz sub-channels are first punctured, and then in the remaining non-consecutive 480 MHz channel, 4th to 6th 80 MHz sub-channels are punctured in order of frequency from low to high, 3 types of MRUs are constructed, for example: 5×996-tone MRU 31 to MRU 33.

If 2nd and 6th 80 MHz sub-channels are first punctured, and then in the remaining non-consecutive 480 MHz channel, 5th to 6th 80 MHz sub-channels are punctured in order of frequency from low to high, 2 types of MRUs are constructed, for example: 5×996-tone MRU 34 to MRU 35.

If 2nd and 7th 80 MHz sub-channels are first punctured, and then in the remaining non-consecutive 480 MHz channel, a 6th 80 MHz sub-channel is punctured in order of frequency from low to high, 1 type of MRU is constructed, for example: 5×996-tone MRU 36.

If 3rd and 4th 80 MHz sub-channels are first punctured, and then in the remaining non-consecutive 480 MHz channel, 3rd to 6th 80 MHz sub-channels are punctured in order of frequency from low to high, 4 types of MRUs are constructed, for example: 5×996-tone MRU 37 to MRU 40.

If 3rd and 5th 80 MHz sub-channels are first punctured, and then in the remaining non-consecutive 480 MHz channel, 4th to 6th 80 MHz sub-channels are punctured in order of frequency from low to high, 3 types of MRUs are constructed, for example: 5×996-tone MRU 41 to MRU 43.

If 3rd and 6th 80 MHz sub-channels are first punctured, and then in the remaining non-consecutive 480 MHz channel, 5th to 6th 80 MHz sub-channels are punctured in order of frequency from low to high, 2 types of MRUs are constructed, for example: 5×996-tone MRU 44 to MRU 45.

If 3rd and 7th 80 MHz sub-channels are first punctured, and then in the remaining non-consecutive 480 MHz channel, a 6th 80 MHz sub-channel is punctured in order of frequency from low to high, 1 type of MRU is constructed, for example: 5×996-tone MRU 46.

If 4th and 5th 80 MHz sub-channels are first punctured, and then in the remaining non-consecutive 480 MHz channel, 4th to 6th 80 MHz sub-channels are punctured in order of frequency from low to high, 3 types of MRUs are constructed, for example: 5×996-tone MRU 47 to MRU 49.

If 4th and 6th 80 MHz sub-channels are first punctured, and then in the remaining non-consecutive 480 MHz channel, 5th to 6th 80 MHz sub-channels are punctured in order of frequency from low to high, 2 types of MRUs are constructed, for example: 5×996-tone MRU 50 to MRU 51.

If 4th and 7th 80 MHz sub-channels are first punctured, and then in the remaining non-consecutive 480 MHz channel, a 6th 80 MHz sub-channel is punctured in order of frequency from low to high, 1 type of MRU is constructed, for example: 5×996-tone MRU 52.

If 5th and 6th 80 MHz sub-channels are first punctured, and then in the remaining non-consecutive 480 MHz channel, 5th to 6th 80 MHz sub-channels are punctured in order of frequency from low to high, 2 types of MRUs are constructed, for example: 5×996-tone MRU 53 to MRU 54.

If 5th and 7th 80 MHz sub-channels are first punctured, and then in the remaining non-consecutive 480 MHz channel, a 6th 80 MHz sub-channel is punctured in order of frequency from low to high, 1 type of MRU is constructed, for example: 5×996-tone MRU 55.

If 6th and 7th 80 MHz sub-channels are first punctured, and then in the remaining non-consecutive 480 MHz channel, a 6th 80 MHz sub-channel is punctured in order of frequency from low to high, 1 type of MRU is constructed, for example: 5×996-tone MRU 56.

### Option 2 (24 types, any one 160 MHz and any one 80 MHz are punctured)

Considering the spectrum utilization efficiency and the implementation and testing complexity, for the 5×996-tone MRU, it is allowed to first puncture any one 160 MHz sub-channel in one 640MHz UHR PPDU, and then puncture any one 80 MHz sub-channel in the remaining 480 MHz. The 5×996-tone MRU is composed of five 996-tone RUs in one 640MHz UHR PPDU. A data tone of the 5×996-tone MRU is composed of a union of data tones of five 996-tone RUs constituting the 5×996-tone MRU. A pilot tone of the 5×996-tone MRU is composed of a union of pilot tones of five 996-tone RUs constituting the 5×996-tone MRU. There are 24 types of 5×996-tone MRUs in the 640MHz UHR PPDU.

If a 1st 160 MHz sub-channel is first punctured, and then in the remaining 480 MHz channel, 1st to 6th 80 MHz sub-channels are punctured respectively in order of frequency from low to high, 6 types of MRUs are constructed, for example: 5×996-tone MRU 1 to MRU 6.

If a 2nd 160 MHz sub-channel is first punctured, and then in the remaining non-consecutive 480 MHz channel, 1st to 6th 80 MHz sub-channels are punctured respectively in order of frequency from low to high, 6 types of MRUs are constructed, for example: 5×996-tone MRU 7 to MRU 12.

If a 3rd 160 MHz sub-channel is first punctured, and then in the remaining non-consecutive 480 MHz channel, 1st to 6th 80 MHz sub-channels are punctured respectively in order of frequency from low to high, 6 types of MRUs are constructed, for example: 5×996-tone MRU 13 to MRU 18.

If a 4th 160 MHz sub-channel is first punctured, and then in the remaining 480 MHz channel, 1st to 6th 80 MHz sub-channels are punctured respectively in order of frequency from low to high, 6 types of MRUs are constructed, for example: 5×996-tone MRU 19 to MRU 24.

### Option 3 (12 types, a 1st or 4th 160 MHz sub-channel is first punctured, and then any one 80 MHz sub-channel in the remaining 480 MHz sub-channel is punctured)

Considering the implementation and testing complexity, for the 5×996-tone MRU, it is allowed to puncture 1st or 4th 160 MHz sub-channels in one 640MHz UHR PPDU, and then puncture any one 80 MHz sub-channel in the remaining 480 MHz channel. The 5×996-tone MRU is composed of five 996-tone RUs in one 640MHz UHR PPDU. A data tone of the 5×996-tone MRU is composed of a union of data tones of five 996-tone RUs constituting the 5×996-tone MRU. A pilot tone of the 5×996-tone MRU is composed of a union of pilot tones of five 996-tone RUs constituting the 5×996-tone MRU. There are 12 types of 5×996-tone MRUs in the 640MHz UHR PPDU. For 5×996-tone MRU 1 to MRU 6, a 4th 160 MHz sub-channel is punctured first, and then 1st to 6th 80 MHz sub-channels are punctured respectively in order of frequency from low to high in the remaining 480 MHz bandwidth; for 5×996-tone MRU 7 to MRU 12, a 1st 160 MHz sub-channel is punctured first, and then 1st to 6th 80 MHz sub-channels are punctured respectively in order of frequency from low to high in the remaining 480 MHz bandwidth, as shown in FIG. 13.

### Example 16:

To reduce the implementation and testing complexity, the 5×996-tone MRU may be used only for the non-OFDMA 640MHz UHR PPDU transmission.

### Example 17:

The 5×996-tone MRU may be used for the non-OFDMA 640MHz UHR PPDU transmission and the OFDMA 640MHz UHR PPDU transmission.

The embodiments of the present disclosure can extend the communication bandwidth and increase the spectrum utilization efficiency based on the large-size MRU.

For the large-size MRU constructed based on the 240 MHz bandwidth, a 220 MHz bandwidth is constructed by puncturing one 20 MHz sub-channel; and a 200MHz bandwidth is constructed by puncturing two 20 MHz sub-channels.

For the large-size MRU constructed based on the 480 MHz bandwidth, a 440 MHz bandwidth is constructed by puncturing one 40 MHz sub-channel; a 400MHz bandwidth is constructed by puncturing one 80 MHz sub-channel; and a 360MHz bandwidth is constructed by puncturing 40 MHz and 80 MHz sub-channels simultaneously.

For the large-size MRU constructed based on the 640 MHz bandwidth, a 560 MHz bandwidth is constructed by puncturing one 80 MHz sub-channel; for the 640 MHz, a 480MHz bandwidth is constructed by puncturing one 160 MHz sub-channel; and for the 640 MHz, a 400MHz bandwidth is constructed by puncturing one 160 MHz sub-channel and one 80 MHz sub-channel simultaneously.

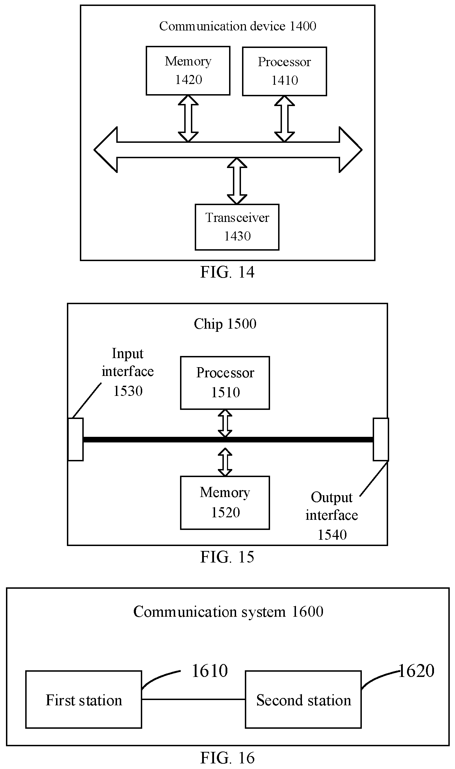

FIG. 14 is a schematic structural diagram of a communication device 1400 in accordance with the embodiments of the present disclosure. The communication device 1400 includes a processor 1410, the processor 1410 may call a computer program from a memory and run the computer program, to cause the communication device 1400 to perform the methods in the embodiments of the present disclosure.

In one implementation, the communication device 1400 may further include a memory 1420. Herein, the processor 1410 may call a computer program from the memory 1420 and run the computer program, to cause the communication device 1400 to implement the methods in the embodiments of the present disclosure.

Herein, the memory 1420 may be a separate device independent from the processor 1410, or may also be integrated into the processor 1410.

In one implementation, the communication device 1400 may further include a transceiver 1430, and the processor 1410 may control the transceiver 1430 to communicate with other devices, and specifically, to transmit information or data to other devices, or receive information or data transmitted by other devices.

Herein, the transceiver 1430 may include a transmitter and a receiver. The transceiver 1430 may further include an antenna(s), and the number of antenna(s) may be one or more.

In one implementation, the communication device 1400 may specifically be the station in the embodiments of the present disclosure, and the communication device 1400 may implement the corresponding procedures implemented by the station in various methods of the embodiments of the present disclosure, which will not be repeated here for the sake of brevity.

FIG. 15 is a schematic structural diagram of a chip 1500 in accordance with the embodiments of the present disclosure. The chip 1500 includes a processor 1510, and the processor 1510 may call a computer program from a memory and run the computer program, to implement the methods in the embodiments of the present disclosure.

In one implementation, the chip 1500 may further include a memory 1520. Herein, the processor 1510 may call a computer program from the memory 1520 and run the computer program, to implement the methods performed by the terminal device or the network device in the embodiments of the present disclosure.

Herein, the memory 1520 may be a separate device independent from the processor 1510, or may be integrated into the processor 1510.

In one implementation, the chip 1500 may further include an input interface 1530. Herein, the processor 1510 may control the input interface 1530 to communicate with other devices or chips, and specifically, to acquire information or data transmitted by other devices or chips.

In one implementation, the chip 1500 may further include an output interface 1540. Herein, the processor 1510 may control the output interface 1540 to communicate with other devices or chips, and specifically, to output information or data to other devices or chips.

In one embodiment, the chip may be applied to the station in the embodiments of the present disclosure, and the chip may implement the corresponding procedures implemented by the station in various methods of the embodiments of the present disclosure, which will not be repeated here for the sake of brevity.

It should be understood that the chip mentioned in the embodiments of the present disclosure may also be referred to as a system-level chip, a system chip, a chip system or a system-on-chip, etc.

The processor mentioned above may be a general-purpose processor, a digital signal processor (DSP), a field programmable gate array (FPGA), an application specific integrated circuit (ASIC) or other programmable logic devices, transistor logic devices, discrete hardware components, etc. Herein, the general-purpose processor mentioned above may be a microprocessor or any conventional processor, etc.

The memory mentioned above may be a volatile memory or a nonvolatile memory, or may include both the volatile memory or the nonvolatile memory. Herein, the non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM).

It should be understood that the above memory is exemplary but not limiting illustration, e.g., the memory in embodiments of the present disclosure may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present disclosure is intended to include, but not limited to, these and any other suitable types of memories.

FIG. 16 is a schematic block diagram of a communication system 1600 in accordance with the embodiments of the present disclosure. The communication system 1600 includes a first station 1610 and a second station 1620. Herein, the first station 1610 may be configured to implement the corresponding functions implemented by the non-AP station in the above methods, and the second station 1620 may be configured to implement the corresponding functions implemented by the AP station in the above methods, which will not be repeated here for the sake of brevity.

In the above embodiments, all or a part of them may be implemented by software, hardware, firmware or any combination thereof. When implemented by using software, all or a part of the embodiments may be implemented in a form of a computer program product. The computer program product includes one or more computer instructions. When the computer program instructions are loaded and run on a computer, the procedures or functions in the embodiments of the present disclosure are generated in whole or in part. The computer may be a general-purpose computer, a special purpose computer, a computer network, or other programmable apparatus. The computer instruction(s) may be stored in a computer-readable storage medium, or transmitted from one computer-readable storage medium to another computer-readable storage medium. For example, the computer instruction(s) may be transmitted from one website, computer, server, or data center to another website, computer, server, or data center in a wired (e.g., coaxial cable, optical fiber, digital subscriber line (Digital Subscriber Line, DSL)) or wireless (e.g., infrared, wireless, microwave, etc.) manner. The computer-readable storage medium may be any available medium that can be read by a computer, or may be a data storage device such as a server or a data center that includes one or more available media, etc. The available medium may be a magnetic medium (e.g., a floppy disk, a hard disk, a magnetic tape), an optical medium (e.g., a digital video disc (DVD)), or a semiconductor medium (e.g., a solid state disk (Solid State Disk, SSD)), etc.

It should be understood that in the various embodiments of the present disclosure, the size of the sequence numbers of the above processes does not mean the order of execution. The order of execution of each process should be determined by its function and internal logic, but should not constitute any limitation on the implementation processes of the embodiments of the present disclosure.

Those skilled in the art may clearly understand that, for the convenience and brevity of the description, the specific working processes of the systems, apparatus and units described above may refer to the corresponding processes in the above method embodiments, which will not be repeated here.
The foregoing descriptions are merely specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be determined based on the protection scope of the claims.

## Claims

1. A communication method, comprising:
acquiring, by a station, a transmission resource of a data packet, wherein the transmission resource of the data packet comprises a multiple resource unit (MRU) divided based on a first channel.

2. The method according to claim 1, wherein the MRU is obtained by dividing the first channel based on puncturing information and/or a bandwidth of the first channel.

3. The method according to claim 2, wherein the puncturing information comprises at least one of a puncturing granularity, a location of a punctured sub-channel, and a number of punctured sub-channels.

4. The method according to any one of claims 1 to 3, wherein the data packet is an ultra-high reliability (UHR) physical layer protocol data unit (PPDU).

5. The method according to any one of claims 1 to 4, wherein a bandwidth of the first channel is greater than a set bandwidth, and a size of the MRU is greater than a set size.

6. The method according to any one of claims 1 to 5, wherein the first channel is a 240 MHz channel, and the 240 MHz channel is a channel with a bandwidth of 240 MHz in a 5 GHz frequency band, or a channel with a bandwidth of 240 MHz in a 6 GHz frequency band.

7. The method according to claim 6, wherein puncturing information is puncturing one 20 MHz sub-channel, and a puncturing method of the 240 MHz channel comprises: in the bandwidth of the 240 MHz channel, puncturing 1st to 12th 20 MHz sub-channels respectively in order of frequency to obtain 12 types of MRUs, and the MRU comprises two 996-tone RUs, one 484-tone RU and one 242-tone RU.

8. The method according to claim 7, wherein a data tone of the MRU is composed of a union of data tones of two 996-tone RUs, one 484-tone RU and one 242-tone RU constituting the MRU; and/or, a pilot tone of the MRU is composed of a union of pilot tones of two 996-tone RUs, one 484-tone RU and one 242-tone RU constituting the MRU.

9. The method according to claim 6, wherein puncturing information is puncturing one 40 MHz sub-channel, and a puncturing method of the 240 MHz channel comprises: in the bandwidth of the 240 MHz channel, puncturing 1st to 6th 40 MHz sub-channels respectively in order of frequency to obtain 6 types of MRUs, and the MRU comprises two 996-tone RUs and one 484-tone RU.

10. The method according to claim 9, wherein a data tone of the MRU is composed of a union of data tones of two 996-tone RUs and one 484-tone RU constituting the MRU; and/or, a pilot tone of the MRU is composed of a union of pilot tones of two 996-tone RUs and one 484-tone RU constituting the MRU.

11. The method according to any one of claims 7 to 10, wherein the MRU is used for a transmission of a PPDU with a bandwidth of 240 MHz, and the PPDU with the bandwidth of 240 MHz comprises a non-OFDMA 240MHz UHR PPDU and/or an OFDMA 240MHz UHR PPDU.

12. The method according to any one of claims 1 to 5, wherein the first channel is a 480 MHz channel, and the 480 MHz channel is a channel with a bandwidth of 480 MHz in a 5 GHz frequency band, or a channel with a bandwidth of 480 MHz in a 6 GHz frequency band.

13. The method according to claim 12, wherein puncturing information is puncturing one 40 MHz sub-channel, and a puncturing method corresponding to the 480 MHz channel comprises: in the bandwidth of the 480 MHz channel, puncturing 1st to 12th 40 MHz sub-channels respectively in order of frequency to obtain 12 types of MRUs, and the MRU comprises five 996-tone RUs and one 484-tone RU.

14. The method according to claim 13, wherein a data tone of the MRU is composed of a union of data tones of five 996-tone RUs and one 484-tone RU constituting the MRU; and/or, a pilot tone of the MRU is composed of a union of pilot tones of five 996-tone RUs and one 484-tone RU constituting the MRU.

15. The method according to claim 12, wherein puncturing information is puncturing one 80 MHz sub-channel, and a puncturing method corresponding to the 480 MHz channel comprises: in the bandwidth of the 480 MHz channel, puncturing 1st to 6th 80 MHz sub-channels respectively in order of frequency to obtain 6 types of MRUs, and the MRU comprises five 996-tone RUs.

16. The method according to claim 15, wherein a data tone of the MRU is composed of a union of data tones of five 996-tone RUs constituting the MRU; and/or, a pilot tone of the MRU is composed of a union of pilot tones of five 996-tone RUs constituting the MRU.

17. The method according to claim 12, wherein puncturing information is puncturing one 80 MHz sub-channel and one 40 MHz sub-channel, and a puncturing method corresponding to the 480 MHz channel comprises at least one of the following:
in the bandwidth of the 480 MHz channel, first puncturing any one 80 MHz sub-channel, and then puncturing any one 40 MHz sub-channel in a remaining bandwidth to obtain 60 types of MRUs;
in the bandwidth of the 480 MHz channel, first puncturing a first 80 MHz sub-channel or a last 80 MHz sub-channel, and then puncturing any one 40 MHz sub-channel in a remaining bandwidth to obtain 20 types of MRUs;
wherein the MRU comprises four 996-tone RUs and one 484-tone RU.

18. The method according to claim 17, wherein a data tone of the MRU is composed of a union of data tones of four 996-tone RUs and one 484-tone RU constituting the MRU; and/or, a pilot tone of the MRU is composed of a union of pilot tones of four 996-tone RUs and one 484-tone RU constituting the MRU.

19. The method according to any one of claims 12 to 18, wherein the MRU is used for a transmission of a PPDU with a bandwidth of 480 MHz, and the PPDU with the bandwidth of 480 MHz comprises a non-OFDMA 480MHz UHR PPDU and/or an OFDMA 480MHz UHR PPDU.

20. The method according to any one of claims 1 to 5, wherein the first channel is a 640 MHz channel, and the 640 MHz channel is a channel with a bandwidth of 640 MHz in a 5 GHz frequency band, or a channel with a bandwidth of 640 MHz in a 6 GHz frequency band.

21. The method according to claim 20, wherein puncturing information is puncturing one 80 MHz sub-channel, and a puncturing method corresponding to the 640 MHz channel comprises: in the bandwidth of the 640 MHz channel, puncturing 1st to 8th 80 MHz sub-channels respectively in order of frequency to obtain 8 types of MRUs, and the MRU comprises seven 996-tone RUs.

22. The method according to claim 21, wherein a data tone of the MRU is composed of a union of data tones of seven 996-tone RUs constituting the MRU; and/or, a pilot tone of the MRU is composed of a union of pilot tones of seven 996-tone RUs constituting the MRU.

23. The method according to claim 20, wherein puncturing information is puncturing two 80 MHz sub-channels, and a puncturing method corresponding to the 640 MHz channel comprises at least one of the following:
in the bandwidth of the 640 MHz channel, puncturing any two 80 MHz sub-channels to obtain 28 types of MRUs;
in the bandwidth of the 640 MHz channel, starting from a first 160 MHz sub-channel, puncturing one 160 MHz sub-channel in sequence to obtain 28 types of MRUs;
wherein the MRU comprises six 996-tone RUs.

24. The method according to claim 23, wherein a data tone of the MRU is composed of a union of data tones of six 996-tone RUs constituting the MRU; and/or, a pilot tone of the MRU is composed of a union of pilot tones of six 996-tone RUs constituting the MRU.

25. The method according to claim 20, wherein puncturing information is puncturing three 80 MHz sub-channels, and a puncturing method corresponding to the 640 MHz channel comprises at least one of the following:
in the bandwidth of the 640 MHz channel, puncturing any three 80 MHz sub-channels to obtain 56 types of MRUs;
in the bandwidth of the 640 MHz channel, puncturing any one 160 MHz sub-channel and any one 80 MHz sub-channel to obtain 24 types of MRUs;
in the bandwidth of the 640 MHz channel, first puncturing a first 160 MHz sub-channel or a last 160 MHz sub-channel, and then puncturing any one 80 MHz sub-channel in a remaining bandwidth to obtain 12 types of MRUs;
wherein the MRU comprises five 996-tone Rus.

26. The method according to claim 25, wherein a data tone of the MRU is composed of a union of data tones of five 996-tone RUs constituting the MRU; and/or, a pilot tone of the MRU is composed of a union of pilot tones of five 996-tone RUs constituting the MRU.

27. The method according to any one of claims 20 to 26, wherein the MRU is used for a transmission of a PPDU with a bandwidth of 640 MHz, and the PPDU with the bandwidth of 640 MHz comprises a non-OFDMA 640MHz UHR PPDU and/or an OFDMA 640MHz UHR PPDU.

28. A station, comprising:
a processing unit, configured to acquire a transmission resource of a data packet, wherein the transmission resource of the data packet comprises a multiple resource unit (MRU) divided based on a first channel.

29. The station according to claim 28, wherein the MRU is obtained by dividing the first channel based on puncturing information and/or a bandwidth of the first channel.

30. The station according to claim 29, wherein the puncturing information comprises at least one of a puncturing granularity, a location of a punctured sub-channel, and a number of punctured sub-channels.

31. The station according to any one of claims 28 to 30, wherein the data packet is an ultra-high reliability (UHR) physical layer protocol data unit (PPDU).

32. The station according to any one of claims 28 to 31, wherein a bandwidth of the first channel is greater than a set bandwidth, and a size of the MRU is greater than a set size.

33. The station according to any one of claims 28 to 32, wherein the first channel is a 240 MHz channel, and the 240 MHz channel is a channel with a bandwidth of 240 MHz in a 5 GHz frequency band, or a channel with a bandwidth of 240 MHz in a 6 GHz frequency band.

34. The station according to claim 33, wherein puncturing information is puncturing one 20 MHz sub-channel, and a puncturing method of the 240 MHz channel comprises: in the bandwidth of the 240 MHz channel, puncturing 1st to 12th 20 MHz sub-channels respectively in order of frequency to obtain 12 types of MRUs, and the MRU comprises two 996-tone RUs, one 484-tone RU and one 242-tone RU.

35. The station according to claim 34, wherein a data tone of the MRU is composed of a union of data tones of two 996-tone RUs, one 484-tone RU and one 242-tone RU constituting the MRU; and/or, a pilot tone of the MRU is composed of a union of pilot tones of two 996-tone RUs, one 484-tone RU and one 242-tone RU constituting the MRU.

36. The station according to claim 33, wherein puncturing information is puncturing one 40 MHz sub-channel, and a puncturing method of the 240 MHz channel comprises: in the bandwidth of the 240 MHz channel, puncturing 1st to 6th 40 MHz sub-channels respectively in order of frequency to obtain 6 types of MRUs, and the MRU comprises two 996-tone RUs and one 484-tone RU.

37. The station according to claim 36, wherein a data tone of the MRU is composed of a union of data tones of two 996-tone RUs and one 484-tone RU constituting the MRU; and/or, a pilot tone of the MRU is composed of a union of pilot tones of two 996-tone RUs and one 484-tone RU constituting the MRU.

38. The station according to any one of claims 34 to 37, wherein the MRU is used for a transmission of a PPDU with a bandwidth of 240 MHz, and the PPDU with the bandwidth of 240 MHz comprises a non-OFDMA 240MHz UHR PPDU and/or an OFDMA 240MHz UHR PPDU.

39. The station according to any one of claims 28 to 32, wherein the first channel is a 480 MHz channel, and the 480 MHz channel is a channel with a bandwidth of 480 MHz in a 5 GHz frequency band, or a channel with a bandwidth of 480 MHz in a 6 GHz frequency band.

40. The station according to claim 39, wherein puncturing information is puncturing one 40 MHz sub-channel, and a puncturing method corresponding to the 480 MHz channel comprises: in the bandwidth of the 480 MHz channel, puncturing 1st to 12th 40 MHz sub-channels respectively in order of frequency to obtain 12 types of MRUs, and the MRU comprises five 996-tone RUs and one 484-tone RU.

41. The station according to claim 40, wherein a data tone of the MRU is composed of a union of data tones of five 996-tone RUs and one 484-tone RU constituting the MRU; and/or, a pilot tone of the MRU is composed of a union of pilot tones of five 996-tone RUs and one 484-tone RU constituting the MRU.

42. The station according to claim 39, wherein puncturing information is puncturing one 80 MHz sub-channel, and a puncturing method corresponding to the 480 MHz channel comprises: in the bandwidth of the 480 MHz channel, puncturing 1st to 6th 80 MHz sub-channels respectively in order of frequency to obtain 6 types of MRUs, and the MRU comprises five 996-tone RUs.

43. The station according to claim 42, wherein a data tone of the MRU is composed of a union of data tones of five 996-tone RUs constituting the MRU; and/or, a pilot tone of the MRU is composed of a union of pilot tones of five 996-tone RUs constituting the MRU.

44. The station according to claim 39, wherein puncturing information is puncturing one 80 MHz sub-channel and one 40 MHz sub-channel, and a puncturing method corresponding to the 480 MHz channel comprises at least one of the following:
in the bandwidth of the 480 MHz channel, first puncturing any one 80 MHz sub-channel, and then puncturing any one 40 MHz sub-channel in a remaining bandwidth to obtain 60 types of MRUs;
in the bandwidth of the 480 MHz channel, first puncturing a first 80 MHz sub-channel or a last 80 MHz sub-channel, and then puncturing any one 40 MHz sub-channel in a remaining bandwidth to obtain 20 types of MRUs;
wherein the MRU comprises four 996-tone RUs and one 484-tone RU.

45. The station according to claim 44, wherein a data tone of the MRU is composed of a union of data tones of four 996-tone RUs and one 484-tone RU constituting the MRU; and/or, a pilot tone of the MRU is composed of a union of pilot tones of four 996-tone RUs and one 484-tone RU constituting the MRU.

46. The station according to any one of claims 39 to 45, wherein the MRU is used for a transmission of a PPDU with a bandwidth of 480 MHz, and the PPDU with the bandwidth of 480 MHz comprises a non-OFDMA 480MHz UHR PPDU and/or an OFDMA 480MHz UHR PPDU.

47. The station according to any one of claims 28 to 32, wherein the first channel is a 640 MHz channel, and the 640 MHz channel is a channel with a bandwidth of 640 MHz in a 5 GHz frequency band, or a channel with a bandwidth of 640 MHz in a 6 GHz frequency band.

48. The station according to claim 47, wherein puncturing information is puncturing one 80 MHz sub-channel, and a puncturing method corresponding to the 640 MHz channel comprises: in the bandwidth of the 640 MHz channel, puncturing 1st to 8th 80 MHz sub-channels respectively in order of frequency to obtain 8 types of MRUs, and the MRU comprises seven 996-tone RUs.

49. The station according to claim 48, wherein a data tone of the MRU is composed of a union of data tones of seven 996-tone RUs constituting the MRU; and/or, a pilot tone of the MRU is composed of a union of pilot tones of seven 996-tone RUs constituting the MRU.

50. The station according to claim 47, wherein puncturing information is puncturing two 80 MHz sub-channels, and a puncturing method corresponding to the 640 MHz channel comprises at least one of the following:
in the bandwidth of the 640 MHz channel, puncturing any two 80 MHz sub-channels to obtain 28 types of MRUs;
in the bandwidth of the 640 MHz channel, starting from a first 160 MHz sub-channel, puncturing one 160 MHz sub-channel in sequence to obtain 28 types of MRUs;
wherein the MRU comprises six 996-tone RUs.

51. The station according to claim 50, wherein a data tone of the MRU is composed of a union of data tones of six 996-tone RUs constituting the MRU; and/or, a pilot tone of the MRU is composed of a union of pilot tones of six 996-tone RUs constituting the MRU.

52. The station according to claim 47, wherein puncturing information is puncturing three 80 MHz sub-channels, and a puncturing method corresponding to the 640 MHz channel comprises at least one of the following:
in the bandwidth of the 640 MHz channel, puncturing any three 80 MHz sub-channels to obtain 56 types of MRUs;
in the bandwidth of the 640 MHz channel, puncturing any one 160 MHz sub-channel and any one 80 MHz sub-channel to obtain 24 types of MRUs;
in the bandwidth of the 640 MHz channel, first puncturing a first 160 MHz sub-channel or a last 160 MHz sub-channel, and then puncturing any one 80 MHz sub-channel in a remaining bandwidth to obtain 12 types of MRUs;
wherein the MRU comprises five 996-tone RUs.

53. The station according to claim 52, wherein a data tone of the MRU is composed of a union of data tones of five 996-tone RUs constituting the MRU; and/or, a pilot tone of the MRU is composed of a union of pilot tones of five 996-tone RUs constituting the MRU.

54. The station according to any one of claims **47** to 53, wherein the MRU is used for a transmission of a PPDU with a bandwidth of 640 MHz, and the PPDU with the bandwidth of 640 MHz comprises a non-OFDMA 640MHz UHR PPDU and/or an OFDMA 640MHz UHR PPDU.

55. A communication device, comprising: a processor and a memory, wherein the memory is configured to store a computer program, and the processor is configured to call and run the computer program stored in the memory, to cause the communication device to perform the method according to any one of claims 1 to 27.

56. A chip, comprising: a processor, configured to call a computer program from a memory and run the computer program, to cause a device equipped with the chip to perform the method according to any one of claims 1 to 27.

57. A computer-readable storage medium, configured to store a computer program, wherein the computer program, when executed by a device, causes the device to perform the method according to any one of claims 1 to 27.

58. A computer program product, comprising computer program instructions, wherein the computer program instructions cause a computer to perform the method according to any one of claims 1 to 27.

59. A computer program, wherein the computer program causes a computer to perform the method according to any one of claims 1 to 27.
